(19) **Europäisches Patentamt / European Patent Office / Office européen des brevets**

(11) **EP 4 361 203 A1**

(12) # EUROPEAN PATENT APPLICATION
published in accordance with Art. 153(4) EPC

(43) Date of publication:
01.05.2024 Bulletin 2024/18

(21) Application number: 22828493.1

(22) Date of filing: 23.06.2022

(51) International Patent Classification (IPC):
$C08J\ 5/18$ (2006.01)    $B29C\ 55/02$ (2006.01)
$B32B\ 27/00$ (2006.01)    $B32B\ 27/32$ (2006.01)
$H01G\ 4/32$ (2006.01)

(52) Cooperative Patent Classification (CPC):
B29C 55/02; B32B 27/00; B32B 27/32; C08J 5/18;
H01G 4/32

(86) International application number:
PCT/JP2022/025078

(87) International publication number:
WO 2022/270577 (29.12.2022 Gazette 2022/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.06.2021 JP 2021105361
20.01.2022 JP 2022006986

(71) Applicant: Toray Industries, Inc.
Tokyo 103-8666 (JP)

(72) Inventors:
• IMANISHI, Yasuyuki
Otsu-shi, Shiga 520-8558 (JP)
• OHKURA, Masatoshi
Otsu-shi, Shiga 520-8558 (JP)
• TATSUKI, Toshiumi
Otsu-shi, Shiga 520-8558 (JP)

(74) Representative: Mewburn Ellis LLP
Aurora Building
Counterslip
Bristol BS1 6BX (GB)

(54) **POLYOLEFIN-BASED FILM, METALLIZED FILM INCLUDING SAME, FILM CAPACITOR, POWER CONTROL UNIT, ELECTRIC VEHICLE, AND ELECTRIC AIRCRAFT**

(57) An object of the present invention is to provide a polyolefin-based film that is excellent in withstand voltage characteristics and reliability in high-temperature environments and is suitable for use in, for example, capacitors to be used at high temperatures and high voltages, and a main object is to provide a polyolefin-based film that includes a layer A including a cycloolefin-based resin and a polypropylene-based resin and has a total light transmittance of 85% or more and an internal haze of 4.0% or less.

【FIG1】

**Description**

TECHNICAL FIELD

The present invention particularly relates to a polyolefin-based film suitably used for capacitor applications.

BACKGROUND ART

Recently, inverters are introduced into most of electric facilities, and it is increasingly required to downsize capacitors as well as increase the capacitance of capacitors. In particular, in applications such as automobiles (including electric automobiles and hybrid cars applications), electric aircraft, solar power generation, and wind power generation, in response to the requirement, a capacitor film is required to be further thinned and improved in heat resistance in addition to improvement in withstand voltage and maintenance of producibility and processing suitability in capacitor element production.

Among polyolefin-based films, a polypropylene film has been considered to have high heat resistance and high breakdown voltage. On the other hand, in application to the above-mentioned fields, it is important for the film to exhibit excellent dimensional stability at a use environmental temperature and stable electrical performance (such as withstand voltage) in a region 10°C to 20°C higher than the use environmental temperature. Here, from the viewpoint of the heat resistance, when considering power semiconductor applications using silicon carbide (SiC) in the future, the use environmental temperature is expected to be higher.

From such a background, a capacitor is required to have further improved heat resistance and withstand voltage, and a film for a capacitor is required to have an improved breakdown voltage in a high-temperature environment exceeding 110°C. However, as disclosed in Non-Patent Document 1, the upper limit of operating temperature of the polypropylene film is said to be about 110°C, and it is extremely difficult to stably maintain the breakdown voltage of the polypropylene film under such a temperature environment.

In order to reduce the size of the film capacitor and improve the heat resistance, it is conceivable to reduce the film thickness and use a film having a high relative permittivity and to use a film having a glass transition temperature exceeding the use environmental temperature range of the capacitor. For example, there has been proposed a laminate having a laminated structure in which two kinds of layers having different relative permittivities are alternately superposed, one layer being formed of a cycloolefin polymer having a glass transition temperature of more than 130°C, and the other layer being a polypropylene layer, the laminate being capable of maintaining a large capacitance while having heat resistance and withstand voltage (for example, Patent Document 1). In addition, a film in which processability is improved by co-extrusion and co-stretching at the time of forming a laminate of a cycloolefin polymer and polypropylene has been proposed (for example, Patent Documents 2 and 3). Furthermore, a film in which thermal dimensional stability in a high-temperature environment is improved by blending a cycloolefin polymer and a polypropylene resin, forming a film, and biaxially stretching the film has been proposed (for example, Patent Document 4).

PRIOR ART DOCUMENTS

PATENT DOCUMENTS

Patent Document 1: Japanese Patent Laid-open Publication No. 2015-012076
Patent Document 2: International Publication No. 2017/022706
Patent Document 3: Japanese Patent Laid-open Publication No. 2018-034510
Patent Document 4: Japanese Patent Laid-open Publication No. 2020-521867

NON-PATENT DOCUMENT

Non-Patent Document 1: MOTONOBU KAWAI: "Film Capacitor Breakthrough, from Car to Energy", NIKKEI ELECTRONICS, Nikkei Business Publications, Inc., 17 September 2012, p. 57-62

SUMMARY OF THE INVENTION

PROBLEMS TO BE SOLVED BY THE INVENTION

However, since the film of Patent Document 1 is not a co-extruded laminate but a laminate in which a cycloolefin polymer layer is formed on a polypropylene film by a coating method, the cycloolefin polymer layer is easily peeled off, and it is difficult to say that the performance and reliability when the film is formed into a capacitor are sufficient. In the film of Patent Document 2, since the base layer unit of the laminated configuration is formed of a cycloolefin polymer alone, it is difficult to increase the area stretch ratio, the withstand voltage in a high-temperature environment is insufficient, and it is difficult to say that the performance and reliability of the film as a capacitor are sufficient. In the film of Patent Document 3, the base layer unit of the laminated configuration is a cycloolefin polymer, and an elastomer is contained to improve the stretchability to increase the area stretch ratio. However, the film is not satisfactory in withstand voltage in a high-temperature environment, and it is difficult to say that the performance and reliability of the film as a capacitor are sufficient. Since the film of Patent Document 4 is a film obtained by simply blending a cycloolefin polymer and a polypropylene resin, it is difficult to increase the area stretch ratio, the withstand voltage in a high-temperature environment is insufficient, and it is difficult to say that the performance and reliability of the film as a capacitor are sufficient.

Therefore, an object of the present invention is to provide a polyolefin-based film that is excellent in withstand voltage characteristics and reliability in a high-temperature environment and suitable for capacitor applications and the like used at high temperatures and high voltages.

SOLUTIONS TO THE PROBLEMS

The present inventors have conducted intensive studies in order to solve the above problems and have invented a first polyolefin-based film of the present invention and a second polyolefin-based film of the present invention below. The first polyolefin-based film of the present invention is a polyolefin-based film including a layer (referred to as "layer A" for convenience) containing a cycloolefin-based resin and a polypropylene-based resin, and having a total light transmittance of 85% or more and an internal haze of 4.0% or less.

The second polyolefin-based film of the present invention is a polyolefin-based film including a layer (referred to as "layer A" for convenience) containing a cycloolefin-based resin and a polypropylene-based resin, in which, assuming a section obtained by cutting the layer A along a plane parallel to a main orientation axis direction and a thickness direction is a section X, in a square of side 1 um defined in the section X such that a pair of sides are parallel to the thickness direction, there are three or more domains of the cycloolefin-based resin passing through the pair of sides parallel to the thickness direction, and an internal haze is 4.0% or less.

EFFECTS OF THE INVENTION

The present invention can provide a polyolefin-based film that is excellent in withstand voltage characteristics and reliability in a high-temperature environment and suitable for capacitor applications and the like used at high temperatures and high voltages.

BRIEF DESCRIPTION OF THE DRAWINGS

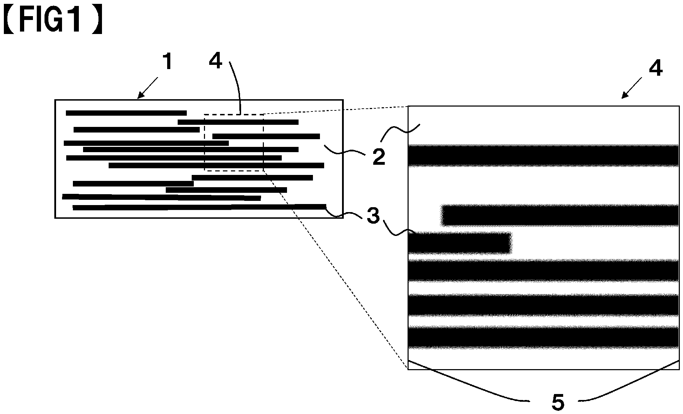

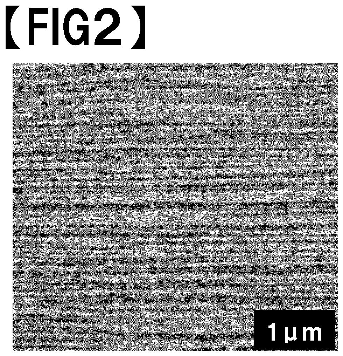

Fig. 1 schematically shows a square of side 1 um defined in a section X of a polyolefin-based film according to one embodiment of the present invention such that a pair of sides are parallel to the thickness direction, and shows domains of a cycloolefin-based resin passing through the pair of sides parallel to the thickness direction of the square. Fig. 2 is an enlarged photograph (magnification: 20,000 times) of the section X of the polyolefin-based film according to one embodiment (embodiment of Example 2) of the present invention.

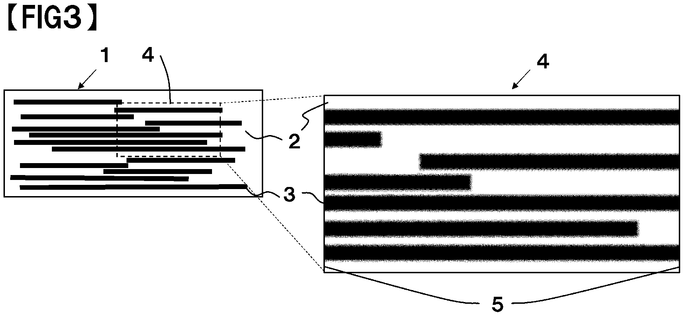

Fig. 3 schematically shows a rectangle measuring 1 um × 2 um defined in the section X of the polyolefin-based film according to one embodiment of the present invention such that a pair of short sides are parallel to the thickness direction, and shows domains of the cycloolefin-based resin passing through the pair of sides parallel to the thickness direction of the square.

EMBODIMENTS OF THE INVENTION

The present inventors have intensively studied to solve the above-described problems and considered the reason why the films disclosed in Patent Documents 1 to 4 have insufficient breakdown voltages under high-temperature environments and insufficient withstand voltage characteristics, reliability, and processability under high-temperature environments when used as a capacitor as follows.

That is, since the film of Patent Document 1 is an unstretched film laminated by a coating method, the present inventors have considered that there are problems that delamination occurs between layers in a high-temperature environment, mechanical properties, particularly the elongation at break, is insufficient, so that the film is easily ruptured during capacitor element processing, and the withstand voltage in a high-temperature environment is lowered. As for the films of Patent Documents 2 and 3, when assuming the voltage resistance in the high-temperature environment, it has been considered that there is a problem in that the longitudinal stretch ratios in formation of the films are both not necessarily sufficient, and therefore a large amount of movable amorphous components are present in the films, so that the dielectric breakdown voltages at high temperatures are lowered. As for the film of Patent Document 4, it has been considered that since the degree of mixing of the cycloolefin polymer and the polypropylene resin is not sufficient when the withstand voltage in a high-temperature environment is assumed, there is a problem in that it is difficult to sufficiently increase the longitudinal stretch ratio in film formation, and a large amount of movable amorphous components are present in the film, so that the dielectric breakdown voltages at high temperatures are lowered.

The present inventors have further conducted studies on the basis of the above discussion and found that when a layer containing a cycloolefin-based resin and a polypropylene-based resin is defined as a layer A, the above-mentioned problems can be solved by providing a polyolefin-based film including the layer A and having a total light transmittance of 85% or more and an internal haze of 4.0% or less. In addition, the present inventors have found that when a layer containing a cycloolefin-based resin and a polypropylene-based resin is defined as the layer A, and a section obtained by cutting the layer A along a plane parallel to a main orientation axis direction and the thickness direction is defined as a section X, the above-mentioned problems can be similarly solved by providing a polyolefin-based film including the layer A, in which in a square of side 1 um defined in the section X such that a pair of sides are parallel to the thickness direction, there are three or more domains of the cycloolefin-based resin passing through the pair of sides parallel to the thickness direction, and an internal haze is 4.0% or less.

That is, when a layer containing a cycloolefin-based resin and a polypropylene-based resin is defined as the layer A, a first polyolefin-based film of the present invention is a polyolefin-based film including the layer A and having a total light transmittance of 85% or more and an internal haze of 4.0% or less. In addition, when a layer containing a cycloolefin-based resin and a polypropylene-based resin is defined as the layer A, and a section obtained by cutting the layer A along a plane parallel to the main orientation axis direction and the thickness direction is defined as a section X, a second polyolefin-based film of the present invention is a polyolefin-based film including the layer A, in which in a square of side 1 um defined in the section X such that a pair of sides are parallel to the thickness direction, there are three or more domains of the cycloolefin-based resin passing through the pair of sides, and an internal haze is 4.0% or less.

Hereinafter, the first and second polyolefin-based films of the present invention will be specifically described. Hereinafter, when the upper limits and the lower limits of preferable ranges are described separately, the limits can be arbitrarily combined. The first and second polyolefin-based films of the present invention may be collectively referred to as the present invention or the polyolefin-based film of the present invention.

In the present specification, the polyolefin-based film may be simply referred to as a film. Since the polyolefin-based film of the present invention is not a microporous film, it does not have a large number of pores. That is, the polyolefin-based film of the present invention means a polyolefin-based film other than the microporous film. Here, the microporous film is defined as a film having a pore structure that penetrates both surfaces of the film and has air permeability of 5,000 seconds/100 ml or less at a permeation time of 100 ml of air at 23°C and a relative humidity of 65% using a B-type Gurley tester of JIS P 8117 (1998).

From the viewpoint of achieving both thermal stability and voltage resistance, the polyolefin-based film of the present invention is required to include the layer A when the layer containing a cycloolefin-based resin and a polypropylene-based resin is defined as the layer A. By adopting such a mode, the resulting polyolefin-based film is excellent in thermal stability and voltage resistance due to the effect of high thermal stability of the cycloolefin-based resin and high voltage resistance of the polypropylene-based resin. The polyolefin-based film of the present invention may have any of a single film configuration including only one layer A, a laminated configuration in which a total of two or more layers A are laminated in the thickness direction, and a laminated configuration in which a total of two or more layers including a layer A and a layer other than the layer A are laminated in the thickness direction. When the polyolefin-based film of the present invention includes a plurality of layers A, the compositions thereof may be the same or different.

The polyolefin-based film here refers to an article formed into a sheet shape containing more than 50% by mass and 100% by mass or less of a polyolefin-based resin when all the components constituting the film are taken as 100% by mass. Here, the polyolefin-based resin refers to a resin containing more than 50 mol% and 100 mol% or less of olefin units when all constituent units constituting the resin are 100 mol%, and the polypropylene-based resin and the cycloolefin-based resin can also be similarly interpreted by replacing the olefin units with propylene units and cycloolefin units, respectively. The thickness direction refers to a direction perpendicular to the film surface.

From the viewpoint of achieving both thermal stability and voltage resistance, the first polyolefin-based film of the present invention is required to have a total light transmittance of 85% or more and an internal haze of 4.0% or less. Here, the total light transmittance is the total light transmittance when light is perpendicularly incident on the film surface, in other words, the total light transmittance in the film thickness direction. Similarly, the internal haze means an internal haze measured by allowing light to be incident perpendicularly to the film surface. From the viewpoint of the thermal stability and the withstand voltage, the total light transmittance is preferably 88% or more, more preferably 90% or more, still more preferably 92% or more. The upper limit is not particularly limited but is set to 99.9%. Furthermore, the internal haze of the first polyolefin-based film of the present invention is preferably 3.0% or less, more preferably 2.0% or less, still more preferably 1.0% or less from the viewpoint of the thermal stability and the withstand voltage described above. The lower limit is not particularly limited but is set to 0.1%.

The fact that the total light transmittance is 85% or more and the internal haze is 4.0% or less indicates a state in which in the layer containing the cycloolefin-based resin and the polypropylene-based resin, the formation of microvoids due to peeling at the sea-island interface of the sea-island structure in which the polypropylene-based resin is regarded as the sea and the cycloolefin-based resin is regarded as the island is suppressed, and the island structure (hereinafter may be referred to as a domain structure) is small or thin. As a result, the first polyolefin-based film of the present invention satisfying the above requirements can obtain the effects of high thermal stability of the cycloolefin-based resin and the high withstand voltage of the polypropylene-based resin, and the dielectric breakdown voltage of the film in a high-temperature environment can be enhanced. When such a film is used for a capacitor, short-circuit breakdown hardly occurs particularly when the film is used for a long time in a high-temperature environment, the voltage resistance is maintained, and high reliability can be obtained. The total light transmittance and the internal haze can be measured with a known haze meter, and detailed conditions thereof will be described later.

In the first polyolefin-based film of the present invention, as a method for setting the total light transmittance to 85% or more and the internal haze to 4.0% or less, a method of controlling the domain structure (sea-island structure) of the layer A can be used. For example, it is effective to produce a compound resin raw material obtained by pre-kneading a cycloolefin-based resin and a polypropylene-based resin as a raw material of the layer A, to form a sheet by melt extrusion after controlling the content of the cycloolefin-based resin, to perform biaxial stretching at an area stretch ratio of 35.0 times or more, and to perform a relaxation treatment while performing a heat treatment after the biaxial stretching.

As an effect brought about by producing the compound resin raw material in advance, an effect of enhancing stretchability can also be expected in addition to enhancement of the total light transmittance and reduction of the internal haze. This is presumed to be because the two types of resins are more uniformly mixed than in the case of simply mixing the resins during film formation, so that the resin as the island component is finely dispersed in the resin as the sea component, and as a result, not only the transparency but also the strength is enhanced. In addition, it is also preferable to dilute the compound resin raw material pre-kneaded with a twin-screw extruder as a masterbatch, because the dispersibility of the cycloolefin-based resin is enhanced.

When a section obtained by cutting the layer A along a plane parallel to the main orientation axis direction and the thickness direction is defined as a section X, in a square of side 1 um defined in the section X such that a pair of sides are parallel to the thickness direction, the second polyolefin-based film of the present invention is required to include three or more domains of the cycloolefin-based resin passing through the pair of sides. The first polypropylene film of the present invention also preferably satisfies the above requirement. In the polyolefin-based film of the present invention, the number of domains of the cycloolefin-based resin passing through the pair of sides (hereinafter may be referred to as a pair of sides parallel to the thickness direction) is preferably five or more, more preferably seven or more. The upper limit is not particularly limited but is set to 100.

When the number of domains of the cycloolefin-based resin passing through the pair of sides parallel to the thickness direction is caused to be three or more, the high thermal stability of the cycloolefin-based resin and the high withstand voltage of the polypropylene-based resin can be reflected in the polyolefin-based film, and the dielectric breakdown voltage of the polyolefin-based film in a high-temperature environment can be enhanced. When such a film is used for a capacitor, short-circuit breakdown hardly occurs particularly when the film is used for a long time in a high-temperature environment, the voltage resistance of the capacitor is maintained, and high reliability can be obtained.

Also in the second polyolefin-based film of the present invention, the internal haze is required to be 4.0% or less for the same reason as in the first invention. The internal haze is preferably 3.0% or less, more preferably 2.0% or less, even more preferably 1.0% or less. The lower limit is not particularly limited but is set to 0.1%. The definition of the internal haze is as described above.

In the second polyolefin-based film of the present invention, as a method for setting the number of domains of a cycloolefin-based resin passing through the pair of sides parallel to the thickness direction to three or more and the internal haze to 4.0% or less, a method of controlling the domain structure (sea-island structure) of the layer A can be used. For example, it is effective to produce a compound resin raw material obtained by pre-kneading a cycloolefin-based resin and a polypropylene-based resin as a raw material of the layer A, to form a sheet by melt extrusion after controlling the content of the cycloolefin-based resin, to perform biaxial stretching at an area stretch ratio of 35.0 times or more, and to perform a relaxation treatment while performing a heat treatment after the biaxial stretching. A similar method can be employed to set the number of domains of the cycloolefin-based resin passing through the pair of sides parallel to the thickness direction to three or more for the first polyolefin-based film of the present invention.

Here, in the polyolefin-based film of the present invention, the "thickness direction" refers to a direction perpendicular to the film surface. The "machine direction" is a direction (hereinafter sometimes referred to as "MD") corresponding to the flow direction in a film production step, and the "transverse direction" is a direction (hereinafter sometimes referred to as "TD") orthogonal to the flow direction in the film production process in the film surface. When the film sample has a shape such as a reel and a roll, it can be said that a film winding direction is the machine direction. When biaxial stretching is performed in the production of the polyolefin-based film, stretching is performed in the machine direction and the transverse direction, but in general, the main orientation axis direction is the direction in which the stretch ratio is larger. When the stretch directions (the machine direction and the transverse direction) are specified but the stretch ratios are unknown, the maximum load until breakage is measured in a tensile test to be described later, and the direction in which the measured value is large can be defined as the main orientation axis direction.

As described above, when the stretch direction and the stretch ratio are known, the main orientation axis direction can be specified, but when these are unknown, the main orientation axis direction can be specified by the following method. Specifically, a film is prepared and cut into a rectangle having a length of 50 mm and a width of 10 mm with an arbitrary direction directed upward to provide a sample <1>, and the direction of the long sides of the sample <1> is defined as 0°. Next, a sample <2> having the same size is collected such that the long side direction is directed in a direction rotated rightward by 15° from the 0° direction. Subsequently, samples <3> to <12> are collected in the same manner by similarly rotating the long side direction of the rectangular sample by 15° each. Next, each rectangular sample is set in a tensile tester (such as "Tensilon" (registered trademark) UCT-100 manufactured by ORIENTEC CORPORATION) at an initial chuck-to-chuck distance of 20 mm such that the long side direction is a tensile direction, and a tensile test is carried out at a tensile speed of 300 mm/min in an atmosphere at room temperature. At this time, the maximum load until the sample is broken is read, the value obtained by dividing the maximum load by the sectional area (film thickness $\times$ width) of the sample before the test is calculated as the stress of the maximum point strength, and the long side direction of the sample that showed the maximum value is defined as the main orientation axis of the polyolefin-based film and as the transverse direction of the polyolefin-based film. A direction orthogonal to this direction is defined as a direction orthogonal to the main orientation axis of the polyolefin-based film and as the machine direction of the polyolefin-based film.

When the width of the sample is less than 50 mm and the tensile test cannot be performed, the crystal orientation of the $\alpha$ crystal (110) plane by wide-angle X-ray is measured as follows and defined as the film machine direction and the film transverse direction on the basis of the following criteria. That is, an X-ray (CuK$\alpha$ ray) is incident in a direction perpendicular to the film surface, a crystal peak at $2\theta$ = about 14° ($\alpha$ crystal (110) plane) is scanned in a circumferential direction, a direction in which the diffraction intensity of the obtained diffraction intensity distribution is the highest is defined as the main orientation axis direction of the polyolefin-based film and as the transverse direction of the polyolefin-based film. A direction orthogonal to this direction may be defined as a direction orthogonal to the main orientation axis of the polyolefin-based film and as the machine direction of the polyolefin-based film.

A method for defining a square of side 1 um in the section X such that a pair of sides are parallel to the thickness direction and a method for determining the number of domains of the cycloolefin-based resin passing through the pair of sides parallel to the thickness direction in the polyolefin-based film of the present invention will be described with reference to the drawings. Fig. 1 schematically shows the square of side 1 um defined in the section X of the polyolefin-based film according to one embodiment of the present invention such that a pair of sides are parallel to the thickness direction, and shows the domains of the cycloolefin-based resin passing through the pair of sides parallel to the thickness direction of the square. Reference signs 1 to 5 in Fig. 1 represents, in order, a part of the section X, a sea portion, an island portion (domain), a square of side 1 um defined in the section X such that a pair of sides are parallel to the thickness direction, and a pair of sides parallel to the thickness direction. The left diagram of Fig. 2 shows a part of the section X, and the right diagram is an enlarged view of the square of side 1 um indicated by a broken line defined in the section X such that a pair of sides is parallel to the thickness direction. In the polyolefin-based film of the present invention, the sea portion is the polypropylene-based resin, and the island portion is the cycloolefin-based resin.

When the square of side 1 um is defined in the section X such that a pair of sides are parallel to the thickness direction, the base of the square is set in the sea portion, and when a domain is located on a side facing the base, the domain is considered to be absent and is not counted as the domains (in the example of Fig. 1, such a domain does not exist).

Here, the "domains of the cycloolefin-based resin passing through a pair of sides parallel to the thickness direction" refer to domains of the cycloolefin-based resin passing through both of the pair of sides parallel to the thickness direction. That is, in the example of Fig. 1 (right diagram), the first and fourth to sixth domains from the top correspond thereto, and the second and third domains from the top do not correspond thereto. Therefore, the number of the "domains of the cycloolefin-based resin passing through the pair of sides parallel to the thickness direction" in this example is four.

When a section obtained by cutting the layer A along a plane parallel to the main orientation axis direction and the thickness direction is defined as the section X, in a rectangle measuring 1 um $\times$ 2 um defined in the section X such that a pair of short sides are parallel to the thickness direction as shown in Fig. 3, the polyolefin-based film of the present invention preferably includes two or more domains of the cycloolefin-based resin passing through the pair of short sides. In the polyolefin-based film of the present invention, the number of domains of the cycloolefin-based resin passing through the pair of sides parallel to the thickness direction is preferably four or more, more preferably six or more. The upper limit is not particularly limited but is set to 100. When the number of domains of the cycloolefin-based resin passing through the pair of sides parallel to the thickness direction is caused to be two or more, the cycloolefin-based resin is finely dispersed in a flatter manner in the plane, the high thermal stability of the cycloolefin-based resin and the high withstand voltage of the polypropylene-based resin can be reflected in the polyolefin-based film, and the dielectric breakdown voltage of the polyolefin-based film in a high-temperature environment can be enhanced. When such a film is used for a capacitor, short-circuit breakdown hardly occurs particularly when the film is used for a long time in a high-temperature environment, the voltage resistance of the capacitor is maintained, and high reliability can be obtained.

In the polyolefin-based film of the present invention, the average value of the lengths in the thickness direction of the domains of the cycloolefin-based resin passing through the pair of sides parallel to the thickness direction is preferably 1 nm or more and 300 nm or less. The average value of the lengths of the domains in the thickness direction is preferably 200 nm or less, more preferably 150 nm or less, still more preferably 99 nm or less, particularly preferably 51 nm or less. When the average value of the lengths of the domains in the thickness direction is caused to be 1 nm or more and 300 nm or less, the effects of the high thermal stability of the cycloolefin-based resin and the high withstand voltage of the polypropylene-based resin can be reflected in the polyolefin-based film, and the dielectric breakdown voltage of the film in a high-temperature environment can be enhanced. When such a film is used for a capacitor, short-circuit breakdown hardly occurs particularly when the film is used for a long time in a high-temperature environment, the voltage resistance is maintained, and high reliability can be obtained. The method for measuring the length in the thickness direction of the domain of the cycloolefin-based resin passing through the pair of sides parallel to the thickness direction and the method for calculating the average value thereof are shown in the EXAMPLES section.

In addition, the average value of the lengths of the domains in the thickness direction may be 1 nm or less, but in this case, for example, when the screw rotation speed at the time of pre-kneading is increased in a twin-screw extruder, the resin temperature becomes higher than a set temperature due to shear heating, and resin deterioration occurs, which may cause foreign matters or deterioration of the reliability and withstand voltage when the film is used for a capacitor. That is, setting the average value of the lengths of the domains in the thickness direction to 1 nm or more contributes to improvement in quality or the reliability and withstand voltage when formed into a capacitor. From the above viewpoint, the lower limit of the average value of the lengths of the domains in the thickness direction is preferably 5 nm, more preferably 10 nm, still more preferably 20 nm.

As a method for setting the average value of the lengths in the thickness direction of the domains of the cycloolefin-based resin passing through the pair of sides parallel to the thickness direction to 1 nm or more and 300 nm or less in the polyolefin-based film of the present invention, a similar method to the method for setting the total light transmittance to 85% or more and the internal haze to 4.0% or less in the first polyolefin-based film of the present invention or the method for setting the number of domains of the cycloolefin-based resin passing through the pair of sides parallel to the thickness direction to three or more and the internal haze to 4.0% or less in the second polyolefin-based film of the present invention can be used.

In the polyolefin-based film of the present invention, the lower limit of the content of the cycloolefin-based resin in all the constituent components of the layer A (the film itself when the polyolefin-based film is composed of only the layer A) is preferably 1% by mass, more preferably 2% by mass, still more preferably 3% by mass, particularly preferably 5% by mass when the total amount of the resin components excluding various additives such as organic particles, inorganic particles, crystal nucleating agents, antioxidants, heat stabilizers, chlorine scavengers, slip agents, antistatic agents, antiblocking agents, fillers, viscosity modifiers, and coloring inhibitors in the entire film is regarded as 100% by mass. On the other hand, the upper limit is preferably 39% by mass, more preferably 32% by mass, more preferably 25% by mass, still more preferably 19% by mass, particularly preferably 14% by mass, most preferably 9% by mass. When the content ratio of the cycloolefin-based resin in the entire film is high, the area ratio may not be increased during stretching, and the withstand voltage in a high-temperature environment may be lowered. When the content ratio is low, the thermal dimensional stability in a high-temperature environment may be lowered, and the withstand voltage and reliability in a high-temperature environment may be lowered.

In the polyolefin-based film of the present invention, when the temperature of a peak at which the absolute value of the vertical axis heat flow is the largest is defined as a melting peak temperature Tm (°C) in a DSC chart obtained by raising the temperature from 30°C to 260°C at 20°C/min with a differential scanning calorimeter DSC, the Tm is preferably more than 170°C and 200°C or less. The Tm is more preferably 171°C or more, still more preferably 172°C or more, particularly preferably 173°C or more, most preferably 174°C or more. The degree of crystallinity of the film and the thermal stability are higher when the Tm is higher, and the breakdown voltage under high-temperature environments is improved. That is, when the Tm exceeds 170°C, withstand voltage characteristics in a high-temperature environment and reliability as a capacitor are improved. On the other hand, the upper limit of the Tm is preferably 200°C from the viewpoint of feasibility based on the olefin resin used for the film.

In this regard, there are the case where two or more melting peak temperatures are observed within the range of more than 170°C and 200°C or less and the case where a multi-step melting peak referred to as a shoulder (a melting peak in which two or more peaks overlap with each other) is observed, but in such a case, the temperature of a peak with the largest absolute value of the vertical axis heat flow (unit: mW) on a DSC chart is regarded as the Tm.

The Tm can be measured as an endothermic peak temperature obtained when the temperature of the film is raised from 30°C to 260°C at a rate of 20°C/min in a nitrogen atmosphere using a differential scanning calorimeter. Detailed measurement conditions are described later.

In the polyolefin-based film of the present invention, in order to regulate the Tm to more than 170°C and 200°C or less or in the above-mentioned preferable range, for example, a method of adjusting the composition and stretch ratio of the polyolefin resin can be used. More specifically, it is effective to use a polypropylene resin having a high melting point as the polyolefin resin and to increase the area stretch ratio to 35.0 times or more. It is also useful to produce a compound resin raw material obtained by pre-kneading the cycloolefin-based resin and the polypropylene-based resin as a raw material of the layer A.

In the polyolefin-based film of the present invention, from the viewpoint of voltage resistance, the relationship between the MD (machine direction) orientation parameter (MOP) and the TD (transverse direction) orientation parameter (TOP) determined from the Raman band intensity measured by Raman spectroscopy preferably satisfies the following formula.

$$MOP/TOP \geq 0.11.$$

From the above viewpoint, MOP/TOP is preferably 0.15 or more, more preferably 0.24 or more, still more preferably 0.26 or more, most preferably 0.31 or more. The preferable upper limit is 0.90 from the viewpoint of the possibility of being able to be realized while biaxially stretching. By increasing the value of MOP/TOP, the effect of the high withstand voltage can be obtained, the dielectric breakdown voltage of the film in a high-temperature environment is increased, short-circuit breakdown hardly occurs particularly when the film is used for a long time in a high-temperature environment as a capacitor, the voltage resistance is maintained, and high reliability can be obtained.

In order to regulate MOP/TOP to 0.11 or more or the above preferable range, for example, it is effective to melt-extrude the compound resin raw material containing the cycloolefin-based resin and the polypropylene-based resin in a diluted state or as it is to form a sheet and biaxially stretch the obtained sheet under the condition that the area stretch ratio is 35.0 times or more (preferably 40.0 times or more) and the stretch ratio in the transverse direction is higher than the stretch ratio in the machine direction, to set the temperature in the preheating step immediately before stretching in the transverse direction in sequential biaxial stretching to the stretching temperature in the transverse direction +5 to +15°C, and the like. Simultaneous biaxial stretching is also effective.

The "machine direction" (hereinafter sometimes referred to as "MD") is a direction corresponding to the flow direction in a film production step, and the "transverse direction" (hereinafter sometimes referred to as "TD") is a direction orthogonal to the machine direction in the film surface. That is, when the film sample has the shape of a reel, a roll or the like, the winding direction is the machine direction, and the direction parallel to the central axis of the winding core is the transverse direction.

From the viewpoint of use as a capacitor in a high-temperature environment, the polyolefin-based film of the present invention preferably has a loss tangent (tan $\delta 0$) of 0.06 or less as determined by dynamic viscoelasticity measurement at 0°C in the transverse direction. The loss tangent (tan $\delta$) is a ratio between the storage elastic modulus (E') (unit: Pa) and the loss elastic modulus (E") (unit: Pa) and is obtained from the formula [tan $\delta$ = E"/E']. That is, it is suggested that the molecular mobility is reduced as the loss tangent (tan $\delta$) is smaller.

Since the polyolefin-based film of the present invention contains the polypropylene-based resin, as the molecular mobility at 0°C, which is the glass transition temperature of the polypropylene resin, is suppressed, the polyolefin-based film has a stable structure with high molecular chain constraint. When the polyolefin-based film of the present invention is used as a capacitor, the film is usually wound in the machine direction to be subjected to capacitor element processing, so that constraint is imposed in the winding direction (machine direction), but suppression of molecular mobility in a direction (transverse direction) orthogonal thereto is important. From the above viewpoint, tan $\delta 0$ is more preferably 0.05 or less, still more preferably 0.04 or less. The lower limit is not particularly limited but is set to 0.001. By setting tan $\delta 0$ within such a range, and as tan $\delta 0$ is lower, the structural stability of the film is higher, and the reliability is improved over a long period of time even when the film is used as a capacitor in a high-voltage and high-temperature environment.

tan $\delta 0$ can be calculated from the following formula by raising the temperature of the film from -100°C to 180°C, drawing a viscoelasticity-temperature curve by a dynamic viscoelasticity method, reading the storage elastic modulus (E'0) at 0°C and the loss elastic modulus (E"0) at 0°C from the viscoelasticity-temperature curve. Detailed measurement conditions are described later.

Formula; tan $\delta 0$ = E"0/E'0.

Examples of the method for setting tan $\delta 0$ to 0.06 or less or in the above preferable range include using a resin having a high meso-pentad fraction and a high melting point as the polypropylene-based resin, increasing the area stretch ratio to 35.0 times or more (preferably 40.0 times or more), setting the preheating temperature immediately before biaxial stretching in the transverse direction after uniaxial stretching in the machine direction to the stretching temperature in the transverse direction +5 to +15°C, and performing a heat treatment after biaxial stretching. Simultaneous biaxial stretching is also effective.

From the viewpoint of improving reliability over a long period of time when the polyolefin-based film of the present invention is used as a capacitor in a high-temperature environment, it is preferable that the shrinkage stress (135Tf) in the transverse direction at 135°C determined by thermomechanical analysis (TMA) be 5.0 MPa or less. From the above viewpoint, the 135Tf is preferably 3.5 MPa or less, more preferably 2.5 MPa or less, further preferably 1.5 MPa or less, most preferably 1.0 MPa or less. The lower limit of the 135Tf is not particularly limited but is set to 0.01 MPa. Details of conditions of the TMA and the like will be described later.

To set the shrinkage stress (135Tf) in the transverse direction to 5.0 MPa or less or in the above preferable range, for example, it is effective to use a resin having a high meso-pentad fraction and a high melting point as the polypropylene-based resin, set the preheating temperature immediately before biaxial stretching in the transverse direction after uniaxial stretching in the machine direction to the stretching temperature in the transverse direction +5 to +15°C, or perform a relaxation treatment at a relaxation ratio larger than 5% during the heat treatment step after biaxial stretching.

When the polyolefin-based film of the present invention is used as a capacitor in a high-temperature environment, from the viewpoint that tightly winding the capacitor element to an appropriate extent in the heat treatment during element processing improves the reliability as a capacitor, the thermal shrinkage ratio (130S) of the film in the machine direction when heated at 130°C for 10 minutes is preferably more than 2.0% and 5.0% or less. From the above viewpoint, the 130S is preferably 2.1% or more, more preferably 2.4% or more, still more preferably 2.8% or more, most preferably 3.2% or more. The 130S is preferably 4.8% or less, more preferably 4.4% or less, even more preferably 4.0% or less.

To set the thermal shrinkage ratio (130S) in the machine direction in the above preferable range, for example, it is effective to use a resin having a high meso-pentad fraction and a high melting point as the polypropylene-based resin, perform biaxial stretching at an area stretch ratio of 35.0 times or more, set the preheating temperature immediately before biaxial stretching in the transverse direction after uniaxial stretching in the machine direction to the stretching temperature in the transverse direction +5 to +15°C, or perform a relaxation treatment at a relaxation ratio larger than 5% during the heat treatment step after biaxial stretching.

The layer configuration of the polyolefin-based film of the present invention is not particularly limited as long as the polyolefin-based film includes the layer A as described above, and the polyolefin-based film may have a single-layer configuration including only the layer A or a laminated configuration including the layer A. However, from the viewpoint of exhibiting stretchability of the film, excellent withstand voltage characteristics and reliability in a high-temperature environment, and processability, when a layer containing a polypropylene-based resin as a main component, containing a polypropylene-based resin in a larger amount than that in the layer A, and containing a cycloolefin-based resin in a smaller amount is defined as a layer B, it is preferable that the layer B be included.

Specific examples of such a mode include a configuration in which a layer B is provided on one surface of a layer A (two-layer configuration of layer A/layer B), a configuration in which layers B are provided on both surfaces of a layer A (three-layer configuration of layer B/layer A/layer B), and a configuration including four or more layers in which layers B are the outermost layers on both surfaces of the film. From the above viewpoint, the three-layer configuration of layer B/layer A/layer B and the configuration including four or more layers in which layers B are the outermost layers on both surfaces of the film are more preferable, and the three-layer configuration of layer B/layer A/layer B is still more preferable. When a plurality of B layers are included, it is preferable that the composition of the layer B contains the polypropylene-based resin in a larger proportion than that of the layer A, and the content (content ratio) of the cycloolefin-based resin is smaller than that of the layer A. If the composition satisfies such a requirement, the layers B may be the same or different.

Examples of the lamination method that can be used for the polyolefin-based film of the present invention include a feedblock method or a multi-manifold method by co-extrusion and a method by coating. From the viewpoint of production efficiency and production cost, a lamination method by co-extrusion (for example, melt co-extrusion) is preferable.

When the polyolefin-based film has a laminated configuration, the upper limit of the ratio of the thickness of the layer A to the total thickness of the polyolefin-based film is preferably 99%, more preferably 95%, still more preferably 90%, most preferably 85% from the viewpoint of controlling the film forming property and the surface shape. The lower limit is preferably 10%, more preferably 15%, still more preferably 20%. For example, when the polyolefin-based film has a three-layer configuration of layer B/layer A/layer B in which layers B are directly laminated on both surface layers of a layer A, the ratio of the thickness of the layer A can be determined by dividing the thickness of the layer A excluding the thickness of the layers B on both surfaces by the thickness of the polyolefin-based film and expressing the ratio in percentage. When the ratio of the layer A is 99% or less, the area ratio in stretching can be sufficiently increased, and a decrease in withstand voltage in a high-temperature environment can be reduced. On the other hand, when the ratio of the layer A is 10% or more, deterioration of thermal dimensional stability in a high-temperature environment is reduced.

The content of the polypropylene-based resin in the layer B in the polyolefin-based film of the present invention is preferably 95% by mass or more, more preferably 96% by mass or more, still more preferably 97% by mass or more when the total amount of the constituent components of the layer B is 100% by mass from the viewpoint of obtaining high withstand voltage and excellent stretchability. The upper limit is not particularly limited but is set to 100% by mass.

Subsequently, a resin that is preferably used for the polyolefin-based film of the present invention will be described.

The polyolefin-based film of the present invention preferably contains a linear polypropylene resin (hereinafter may be referred to as a polypropylene resin (A)) as a main component. The main component herein means a component having the highest percentage by mass (a component of a largest content) among all the components constituting the polyolefin-based film.

The lower limit of the number average molecular weight (Mn) of the polypropylene resin (A) is preferably 30,000, more preferably 40,000, still more preferably 50,000. On the other hand, the upper limit of Mn is preferably 90,000, more preferably 80,000. When the polypropylene resin (A) has the above characteristics, deterioration of film-forming stability, film strength, dimensional stability, and heat resistance can be reduced.

The polypropylene resin (A) preferably has a meso-pentad fraction of 0.960 or more. The meso-pentad fraction is more preferably 0.965 or more, more preferably 0.970 or more, particularly preferably 0.975 or more, most preferably 0.980 or more. The meso-pentad fraction is an index of stereoregularity of a crystal phase of polypropylene measured by the nuclear magnetic resonance method (NMR method), and a material having a higher meso-pentad fraction is preferable because it has a higher degree of crystallinity, higher melting point, and suitability for use at high temperatures. The upper limit of the meso-pentad fraction is not particularly limited. In order to obtain a resin having high stereoregularity as described above, for example, a method of washing the obtained resin powder with a solvent such as n-heptane or a method of appropriately selecting a catalyst and/or a cocatalyst or a composition is preferably adopted.

The polypropylene resin (A) preferably has a melting point of 160°C or more. The melting point is more preferably 161°C or more, still more preferably 162°C or more, particularly preferably 164°C or more, most preferably 167°C or more. When the polypropylene resin (A) has a melting point of 160°C or more, deterioration of the withstand voltage characteristics in a high-temperature environment is reduced when the polypropylene resin (A) is formed into a film.

The melting point of the resin is a peak crystallization temperature obtained when the resin is heated from 30°C to 260°C at 20°C/min with a differential scanning calorimeter DSC. There are the case where two or more melting peak temperatures are observed within the above temperature range and the case where a multi-step peak referred to as a shoulder is observed, but in such a case, the temperature of a peak with the largest absolute value of the vertical axis heat flow (unit: mW) on a DSC chart is regarded as the melting point of the resin.

The polypropylene resin (A) is preferably mainly made of a homopolymer of propylene, but a propylene copolymer containing another unsaturated hydrocarbon as a copolymerizing component may be used, as long as the object of the present invention is not impaired. Examples of the copolymer component contained in the propylene copolymer include ethylene, 1-butene, 1-pentene, 3-methylpentene-1, 3-methylbutene-1, 1-hexene, 4-methylpentene-1, 5-ethylhexene-1, 1-octene, 1-decene, 1-dodecene, vinylcyclohexene, styrene, allylbenzene, cyclopentene, norbornene, and 5-methyl-2-norbornene.

The copolymerization amount of components other than propylene in the propylene copolymer is preferably less than 1 mol% from the viewpoint of dielectric breakdown voltage and heat resistance. Here, the copolymerization amount of the component other than propylene being less than 1 mol% means that the constituent component other than propylene is less than 1 mol% when the constituent component of the resin constituting the polypropylene resin (A) is 100 mol%. That is, when the polypropylene resin (A) is composed of a polypropylene polymer having a copolymerization amount of less than 1 mol%, or when a copolymer of a polypropylene polymer having a copolymerization amount of 1 mol% or more and propylene (or a polypropylene polymer having a copolymerization amount of less than 1 mol%) is mixed so that the component other than propylene accounts for less than 1 mol% in the total, the copolymerization amount of the component other than propylene is less than 1 mol%.

In addition, a polymer containing a component other than propylene as a main constituent component may be blended in the polypropylene resin (A). Examples of the main constituent component in the polymer include ethylene, 1-butene, 1-pentene, 3-methylpentene-1, 3-methylbutene-1, 1-hexene, 4-methylpentene-1, 5-ethylhexene-1, 1-octene, 1-decene, 1-dodecene, vinylcyclohexene, styrene, allylbenzene, and cyclopentene. The blending amount of the polymer containing a component other than propylene as the main constituent component is preferably less than 1 part by mass with respect to 100 parts by mass of the polypropylene resin (A) from the viewpoint of dielectric breakdown voltage and heat resistance.

The cycloolefin-based resin used in the polyolefin-based film of the present invention will be described. The cycloolefin-based resin is a resin that is obtained by polymerization from a cycloolefin as a monomer and has an alicyclic structure in the main chain of the polymer. The cycloolefin-based resin is a polymer containing more than 20% by mass and 100% by mass or less in total of cycloolefin monomer-derived components (constituent units) in 100% by mass of the polymer of the cycloolefin-based resin. The content of the cycloolefin monomer-derived components is preferably more than 50 mass% and 100 mass% or less.

Examples of the cycloolefin monomer include monocyclic olefins such as cyclobutene, cyclopentene, cycloheptene, cyclooctene, cyclopentadiene, and 1,3-cyclohexadiene, bicyclic olefins such as bicyclo[2,2,1]hept-2-ene, 5-methyl-bicyclo[2,2,1]hept-2-ene, 5,5-dimethyl-bicyclo[2,2,1]hept-2-ene, 5-ethyl-bicyclo[2,2,1]hept-2-ene, 5-butyl-bicyclo[2,2,1]hept-2-ene, 5-ethylidene-bicyclo[2,2,1]hept-2-ene, 5-hexyl-bicyclo[2,2,1]hept-2-ene, 5-octyl-bicyclo[2,2,1]hept-2-ene, 5-octadecyl-bicyclo[2,2,1]hept-2-ene, 5-methylidene-bicyclo[2,2,1]hept-2-ene, 5-vinyl-bicyclo[2,2,1]hept-2-ene, and 5-propenyl-bicyclo[2,2,1]hept-2-ene, tricyclic olefins such as tricyclo[4,3,0,12.5]deca-3,7-diene, tricyclo[4,3,0,12.5]dec-3-ene, tricyclo[4,3,0,12.5]undeca-3,7-diene, tricyclo[4,3,0,12.5]undeca-3,8-diene, tricyclo[4,3,0,12.5]undec-3-ene, 5-cyclopentyl-bicyclo[2,2,1]hept-2-ene, 5-cyclohexyl-bicyclo[2,2,1]hept-2-ene, 5-cyclohexenylbicyclo[2,2,1]hept-2-ene, and 5-phenyl-bicyclo[2,2,1]hept-2-ene, tetracyclic olefins such as tetracyclo[4,4,0,12.5,17.10]dodec-3-ene, 8-methyltetracyclo[4,4,0,12.5,17.10]dodec-3-ene, 8-ethyltetracyclo[4,4,0,12.5,17.10]dodec-3-ene, 8-methylidenetetracyclo[4,4,0,12.5,17.10]dodec-3-ene, 8-ethylidenetetracyclo[4,4,0,12.5,17.10]dodec-3-ene, 8-vinyltetracyclo[4,4,0,12.5,17.10]dodec-3-ene, and 8-propenyl-tetracyclo[4,4,0,12.5,17.10]dodec-3-ene, and polycyclic olefins such as 8-cyclopentyl-tetracyclo[4,4,0,12.5,17.10]dodec-3-ene, 8-cyclohexyl-tetracyclo[4,4,0,12.5,17.10]dodec-3-ene, 8-cyclohexenyl-tetracyclo[4,4,0,12.5,17.10]dodec-3-ene, 8-phenyl-cyclopentyl-tetracyclo[4,4,0,12.5,17.10]dodec-3-ene, tetracyclo[7,4,13.6,01.9,02.7]tetradeca-4,9,11,13-tetraene, tetracyclo[8,4,14.7,01.10,03.8]pentadeca-5,10,12,14-tetraene, pentacyclo[6,6,13.6,02.7,09.14]-4-hexadecene, pentacyclo[6,5,1,13.6,02.7,09.13]-4-pentadecene, pentacyclo[7,4,0,02.7,13.6,110.13]-4-pentadecene, heptacyclo[8,7,0,12.9,14.7,111.17,03.8,012.16]-5-eicosene, heptacyclo[8,7,0,12.9,03.8,14.7,012.17,113.16]-14-eicosene, and a tetramer of cyclopentadiene. These cycloolefin monomers can be used singly or in combination of two or more kinds.

Among the above-mentioned cycloolefin monomers, bicyclo[2,2,1]hept-2-ene (hereinafter referred to as norbornene), a tricyclic olefin (hereinafter referred to as tricyclodecene) having 10 carbon atoms such as tricyclo[4,3,0,12.5]dec-3-ene, a tetracyclic olefin (hereinafter referred to as tetracyclododecene) having 12 carbon atoms such as tetracyclo[4,4,0,12.5,17.10]dodec-3-ene, cyclopentadiene, or 1,3-cyclohexadiene is preferably used from the viewpoint of productivity and surface properties.

The cycloolefin-based resin may be either of a resin (hereinafter sometimes referred to as a COP) obtained by polymerizing the cycloolefin monomer alone and a resin (hereinafter sometimes referred to as a COC) obtained by copolymerizing the cycloolefin monomer with a chain olefin monomer, as long as the total content of the cycloolefin monomer-derived components is more than 20% by mass and 100% by mass or less in 100% by mass of the polymer of the cycloolefin-based resin. Preferable examples of available COPs include "ZEONOR" (registered trademark) manufactured by Zeon Corporation. Preferable examples of the COC include "APEL" (registered trademark) manufactured by Mitsui Chemicals, Inc., "ARTON" (registered trademark) manufactured by JSR Corporation, and "TOPAS" (registered trademark) manufactured by Polyplastics Co., Ltd.

The method for producing the COP may be a publicly known method such as addition polymerization or ring-opening polymerization of a cycloolefin monomer. Examples of the method include a method of subjecting norbornene, tricyclodecene, tetracyclodecene, or a derivative thereof to ring-opening metathesis polymerization and then hydrolyzing the resulting polymer, a method of subjecting norbornene or a derivative thereof to addition polymerization, and a method of subjecting cyclopentadiene or cyclohexadiene to 1,2- or 1,4-addition polymerization and then hydrolyzing the resulting polymer. Among them, the method of subjecting norbornene, tricyclodecene, tetracyclodecene, or a derivative thereof to ring-opening metathesis polymerization and then hydrolyzing the resulting polymer is more preferable from the viewpoint of productivity and moldability.

In the case of a COC, examples of preferable chain olefin monomers include ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, and 1-eicosene. Among them, ethylene can be particularly preferably used from the viewpoint of productivity and cost. Further, examples of the method for producing a resin obtained by copolymerizing a cycloolefin monomer with a chain olefin monomer include a publicly known method such as addition polymerization of a cycloolefin monomer and a chain olefin monomer. Among them, preferable examples of the method include addition polymerization of norbornene or a derivative thereof and ethylene.

The cycloolefin-based resin used in the polyolefin-based film of the present invention is preferably an amorphous resin. The glass transition temperature of the amorphous cycloolefin-based resin is preferably 125°C or more, more preferably 130°C or more, still more preferably 135°C or more from the viewpoint of achieving dimensional stability and insulating properties in a high temperature range that are suitable for applications to capacitors and the like. If the glass transition temperature is less than 125°C, thermal dimensional stability and dielectric breakdown voltage at high temperatures may be lowered. The upper limit of the glass transition temperature is not particularly limited but is 200°C from the viewpoint of the film forming property. In the polyolefin-based film of the present invention, the statement that the cycloolefin-based resin is amorphous means that a melting peak temperature (Tm) obtained when the temperature of the cycloolefin-based resin is raised from 30°C to 260°C at 20°C/min with a differential scanning calorimeter DSC is not observed.

The polyolefin-based film of the present invention may contain various additives such as organic particles, inorganic particles, a crystal nucleating agent, an antioxidant, a heat stabilizer, a chlorine scavenger, a slip agent, an antistatic agent, an antiblocking agent, a filler, a viscosity modifier, and a coloring inhibitor as long as the object of the present invention is not impaired.

When an antioxidant is contained among these, selection of the type and amount of addition of the antioxidant is important from the viewpoint of long-term heat resistance. That is, the antioxidant is preferably a phenol-based antioxidant having steric hindrance, and at least one of the antioxidants is preferably a high molecular weight type having a molecular weight of 500 or more. Specific examples thereof include various examples, and for example, it is preferable to use 2,6-di-t-butyl-p-cresol (BHT: molecular weight 220.4) in combination with 1,3,5-trimethyl-2,4,6-tris(3,5-di-t-butyl-4-hydroxybenzyl)benzene (for example, "Irganox" (registered trademark) 1330: molecular weight 775.2, manufactured by BASF) or tetrakis[methylene-3(3,5-di-t-butyl-4-hydroxyphenyl)propionate]methane (for example, "Irganox" (registered trademark) 1010: molecular weight 1,177.7, manufactured by BASF).

The total content of high-molecular-weight antioxidants having molecular weights of 500 or more is preferably in the range of 0.1 to 1.0 part by mass relative to the total amount of the resin. If the amount of the antioxidants is too small, the long-term heat resistance may be poor. If the amount of the antioxidants is too large, blocking at a high temperature due to bleed-out of the antioxidants may adversely affect the capacitor element. The total content is more preferably 0.2 to 0.7 parts by mass, particularly preferably 0.3 to 0.5 parts by mass with respect to the mass of the entire resin. In the case of a laminated configuration of 2 or more layers, it is preferable that the amount of the high-molecular-weight antioxidants having molecular weights of 500 or more is 0.3 to 0.5 parts by mass in each layer from the viewpoint of suppressing defects such as fish eyes and obtaining high quality and withstand voltage performance.

The polyolefin-based film of the present invention may contain a resin other than the polypropylene resin (A) or the cycloolefin-based resin as long as the object of the present invention is not impaired. Specific examples of the resin include vinyl polymer resins containing various polyolefin-based resins, polyester-based resins, polyamidebased resins, polyphenylene sulfide-based resins, polyimide-based resins, polycarbonate-based resins, and olefin- and styrene-based block copolymers. Particularly preferable examples include polymethylpentene and syndiotactic polystyrene. The content of the resin other than the polypropylene resin (A) or the cycloolefin-based resin is preferably less than 3% by mass, more preferably 2% by mass or less, still more preferably 1% by mass or less, when the total amount of the resin components constituting the polyolefin-based film is 100% by mass. If the content of the resin other than the polypropylene resin is 3% by mass or more, the influence of a domain boundary is large, so that the breakdown voltage under a high-temperature environment may be lowered.

The polyolefin-based film of the present invention preferably has a film dielectric breakdown voltage of 350 V/um or more at 135°C. It is more preferably 375 V/um or more, still more preferably 400 V/um or more, particularly preferably 420 V/um or more. The upper limit is not particularly limited and is about 800 V/um. If the film dielectric breakdown voltage at 130°C is 350 V/um or more, short-circuit breakdown hardly occurs particularly when the film is used for a long time in a high-temperature environment as a capacitor, the voltage resistance is maintained, and high reliability can be obtained.

In order to regulate the film dielectric breakdown voltage at 135°C so as to be in the above-mentioned range (350 V/um or more), for example, as described later, it is effective that a raw material having a high meso-pentad fraction is used as the polypropylene resin (A), a compound resin raw material obtained by pre-kneading a cycloolefin-based resin and a polypropylene-based resin with a twin-screw extruder is melt-extruded in a diluted state or as it is to form a sheet, the stretch ratio on the TD side is made higher regarding the stretch ratios in MD and TD in biaxial stretching, and the area stretch ratio is increased to 35.0 times or more.

The polyolefin-based film of the present invention preferably has a film thickness of 0.5 um or more and less than 25 um particularly from the viewpoint of being suitable for a heat-resistant film capacitor of a thin film required for automobile applications (including hybrid car applications) and the like used in a high-temperature environment. The upper limit is preferably 9.0 um or less, still more preferably 5.9 um or less, particularly preferably 3.9 um or less in terms of a balance between characteristics and a capacitor size due to thinning in the heat-resistant film capacitor application.

The polyolefin-based film of the present invention is preferably used as a dielectric film for a capacitor, but the type of the capacitor is not limited. Specifically, from the viewpoint of the electrode configuration, it may be either a combined winding capacitor of a metal foil and a film or a vapor deposited metal film capacitor and is also preferably used for an oil-impregnated capacitor impregnated with an insulating oil or a dry capacitor that does not use an insulating oil at all. However, from the characteristics of the film of the present invention, it is particularly preferably used as a vapor deposited metal film capacitor. From the viewpoint of the shape, it may be a winding type or a lamination type.

Since a polyolefin-based film usually has low surface energy and it is difficult to stably perform metal vapor deposition, it is preferable to perform a surface treatment before vapor deposition for the purpose of improving adhesion to a metal membrane. Specific examples of the surface treatment include a corona discharge treatment, a plasma treatment, a glow treatment, and a flame treatment. For example, in the case of a polypropylene film, the surface wet tension usually is about 30 mN/m, but by these surface treatments, it is preferable to set the wet tension to preferably 37 to 75 mN/m, more preferably 39 to 65 mN/m, most preferably about 41 to 55 mN/m because the adhesion to the metal membrane is excellent and security is also good.

The polyolefin-based film of the present invention can be obtained by biaxial stretching, a heat treatment, and a relaxation treatment using a raw material capable of giving the above-mentioned characteristics. As a method of the biaxial stretching, any of an inflation simultaneous biaxial stretching method, a tenter simultaneous biaxial stretching method, and a tenter sequential biaxial stretching method can be employed, and among them, a tenter sequential biaxial stretching method or a tenter simultaneous biaxial stretching method is preferably employed in terms of controlling the film formation stability, a crystalline/amorphous structure, and the surface characteristics, particularly the mechanical characteristics and thermal dimensional stability while increasing the stretch ratio of the present invention.

Next, a method for producing the polyolefin-based film of the present invention will be described as an example. First, a compound resin raw material obtained by pre-kneading a cycloolefin-based resin and a polypropylene-based resin is melt-extruded in a diluted state or as it is onto a support to obtain an unstretched film. This unstretched film is stretched in the machine direction and then stretched in the transverse direction to be sequentially biaxially stretched. Thereafter, the heat treatment and the relaxation treatment are performed to produce a biaxially oriented polyolefin-based film. Hereinafter, the present invention will be described more specifically, but the present invention is not necessarily interpreted to be limited thereto.

First, for the polyolefin-based film of the present invention, the cycloolefin-based resin, the polypropylene-based resin, and the antioxidant are preferably mixed and compounded in advance from the viewpoint of improving the dispersion state of the cycloolefin-based resin and the polypropylene-based resin (A) to obtain high transparency to particularly increase the dielectric breakdown voltage of the film at a high temperature. For the compounding, a short-screw extruder, a twin-screw extruder, or the like can be used, but from the viewpoint of a good dispersion state and high transparency, it is particularly preferable to use a twin-screw extruder.

The amount of the antioxidant is preferably 0.2 parts by mass or more, more preferably 0.3 parts by mass or more, still more preferably 0.4 parts by mass or more, with respect to 100 parts by mass of the compound resin component. The upper limit is preferably 1.0 parts by mass. In addition, when the meso-pentad fraction of the polypropylene resin (A) is 0.960 or more, the melting point is increased, and the product is suitable for use at a high temperature, which is preferable.

Next, a resin raw material obtained by compounding the cycloolefin-based resin and the polypropylene-based resin is supplied to a single-screw extruder, passed through a filter, and then extruded from a slit-shaped spinneret. The molten sheet extruded from the slit-shaped spinneret is solidified on a casting drum (cooling drum) controlled at a temperature of 10 to 110°C, preferably 10 to 85°C, more preferably 10 to 65°C to obtain an unstretched polyolefin-based film. A laminated structure is preferable from the viewpoint of further increasing the area ratio. In this case, a resin raw material obtained by compounding a cycloolefin-based resin and a polypropylene-based resin in advance is supplied to a single-screw extruder for an inner layer (layer A), the polypropylene resin (A) similar to the resin used for the layer A is supplied to a single-screw extruder for a surface layer (layer B), and a resin laminated in accordance with a three-layer configuration of layer B/layer A/layer B is extruded as a molten sheet from a slit-shaped spinneret through a feed block method by melt co-extrusion and solidified on a cooling drum controlled at a temperature of 10 to 110°C, preferably 10 to 85°C, more preferably 10 to 65°C to obtain an unstretched polypropylene film. As a method for bringing the molten sheet into close contact with a casting drum, any one of an electrostatic application method, an adhesion method using the surface tension of water, an air knife method, a press roll method, an underwater casting method, an air chamber method, and the like may be used, but an air knife method that provides good flatness and is capable of controlling surface roughness is preferable. In addition, in order not to cause vibration of the film, it is preferable to appropriately adjust the position of the air knife so that the air flows to the downstream side of the film formation.

Next, the unstretched polyolefin-based film is biaxially stretched to be biaxially oriented. More specifically, the unstretched polyolefin-based film is preferably stretched at a temperature equal to or more than the glass transition temperature of the cycloolefin-based resin and equal to or less than the melting point of the polyolefin-based resin, more preferably maintained at a temperature of 100 to 170°C, still more preferably 120 to 165°C, stretched preferably 2.0 to 12 times, more preferably 3.0 to 11 times, still more preferably 4.0 to 10 times, most preferably 4.5 to 10 times in the machine direction, and then cooled to room temperature.

Next, the film is guided to the tenter while the end of the film uniaxially stretched in the machine direction is held by a clip. Here, in the present invention, when the temperature of the preheating step immediately before stretching in the transverse direction is preferably set to the stretching temperature in the transverse direction +5 to +15°C, more preferably +5 to +12°C, still more preferably +5 to +10°C, a fibril structure highly oriented in the machine direction by uniaxial stretching can be further strengthened, and the dielectric breakdown voltage of the polyolefin-based film can be enhanced. In addition, it is preferable from the viewpoint of improving the thermal dimensional stability that a molecular chain having insufficient orientation is stabilized by high temperature preheating after uniaxial stretching.

Next, the temperature (stretching temperature in the transverse direction) at which the film is stretched in the transverse direction while the end of the film is held by the clip is preferably 150 to 175°C, more preferably 155 to 175°C.

From the viewpoint of enhancing the dielectric breakdown voltage of the film, the stretch ratio in the transverse direction is preferably 6.0 to 20.0 times, more preferably 8.1 to 17.0 times, still more preferably 9.1 to 15.0 times, particularly preferably 9.8 to 13.0 times. When the stretch ratio in the transverse direction is less than 6.0 times, the orientation contribution of the fibril structure highly oriented in the machine direction by uniaxial stretching remains largely, so that a film in which the molecular chains in the film tend to move easily at the time of evaluating the dielectric breakdown voltage at a high temperature and in which a dielectric breakdown voltage is poor may be obtained. Increasing the stretch ratio in the transverse direction rather than in the machine direction is preferable because orientation in the transverse direction is imparted while maintaining a highly orientated state in the machine direction, so that in-plane molecular chain tension is increased, thereby obtaining an effect of increasing the dielectric breakdown voltage particularly at high temperatures.

Herein, the area stretch ratio is preferably 35.0 times or more. By setting the area stretch ratio to 35.0 times or more, the molecular chain tension in the film plane is increased, and the domain structure becomes smaller or is thinned, so that the internal haze can be lowered, and the total light effect ratio can be increased. As a result, the obtained film has a high breakdown voltage particularly at a high temperature and is excellent in long-term use reliability in a high-temperature environment when used as a capacitor. In the present invention, the area stretch ratio is obtained by multiplying the stretch ratio in the machine direction by the stretch ratio in the transverse direction. The area stretch ratio is more preferably 37.0 times or more, more preferably 40.0 times or more, particularly preferably 44.0 times or more, most preferably 49.0 times or more. The upper limit of the area stretch ratio is not particularly limited but is 90.0 times in the case of sequential biaxial stretching and 150 times in the case of simultaneous biaxial stretching from the viewpoint of feasibility. In the present invention, it is important to reduce the internal haze and increase the total light effect ratio while achieving a high area stretch ratio. That is, in the present invention, it can be achieved by enhancing the dispersibility of the cycloolefin-based resin domains dispersed in the polypropylene-based resin and reducing or eliminating microvoids at the domain interface formed during stretching by setting the heat setting temperature after biaxial stretching to a high temperature.

In the production of the polypropylene film of the present invention, in the subsequent heat treatment and relaxation treatment step, it is preferable to perform the heat treatment at 145°C or more and 170°C or less while applying a relaxation of 2 to 20% in the transverse direction with the tension in the transverse direction maintained by holding with clips from the viewpoint of improving the transparency of the film, increasing the dielectric breakdown voltage at high temperatures, and obtaining the withstand voltage and reliability when the film is formed into a capacitor. From the above viewpoint, the heat treatment temperature is more preferably 150°C or more and 170°C or less, still more preferably 155°C or more and 170°C or less, particularly preferably 160°C or more and 170°C or less. From the above viewpoint, the relaxation ratio is more preferably 5 to 18%, still more preferably 7 to 15%.

After the heat treatment and the relaxation treatment, the film is guided to the outside of the tenter, the clip at the film end is released in a room temperature atmosphere, the film edge is slit in a winder step, and a film product roll having a film thickness of preferably 0.5 um or more and less than 25 um is wound up. Here, in order to improve the adhesion of a vapor-deposited metal on a surface subjected to vapor deposition before winding the film, it is preferable to perform a corona discharge treatment in air, nitrogen, carbon dioxide, or a mixed gas thereof.

In order to obtain the polyolefin-based film of the present invention, specific examples of the intended production conditions are as follows. Although it is preferable to satisfy all of these production conditions, all of them may not necessarily be included but may be appropriately combined. For example, simultaneous biaxial stretching may be employed instead of "in sequential biaxial stretching, the preheating temperature before stretching in the transverse direction is the stretching temperature in the transverse direction +5 to +15°C".

· The meso-pentad fraction of the polypropylene resin (A) is 0.960 or more.
· The cycloolefin-based resin and the polypropylene-based resin are pre-compounded.
· The area stretch ratio of biaxial stretching is 35.0 times or more.
· The stretch ratio in the transverse direction is higher than the stretch ratio in the machine direction.
· In sequential biaxial stretching, the preheating temperature before stretching in the transverse direction is the stretching temperature in the transverse direction +5 to +15°C.
· The heat treatment and the relaxation treatment have been performed after biaxial stretching.

Subsequently, a metallized film obtained using the polyolefin-based film of the present invention, a film capacitor obtained using the metallized film, and a method for producing the metallized film and the film capacitor will be described.

The metallized film of the present invention includes a metal membrane on at least one surface of the polyolefin-based film of the present invention. This metallized film can be obtained by providing a metal membrane on at least one surface of the polyolefin-based film according to the present invention.

In the present invention, the method for attaching a metal membrane is not particularly limited, and for example, a method is preferably used in which aluminum or an alloy of aluminum and zinc is vapor-deposited on at least one surface of a polyolefin-based film to provide a metal membrane such as a vapor deposited film serving as an internal electrode of a film capacitor. At this time, other metal components such as nickel, copper, gold, silver, and chromium can be vapor-deposited simultaneously or sequentially with aluminum. A protective layer can also be provided on the vapor-deposited film with oil or the like. When the surface roughness of the polyolefin-based film is different between the front and back surfaces, it is preferable to provide a metal membrane on the surface side having a smooth roughness to form a metallized film from the viewpoint of enhancing the withstand voltage.

In the present invention, if necessary, after the metal membrane is formed, the metallized film can be subjected to an annealing treatment or a heat treatment at a specific temperature. For insulation or other purposes, at least one surface of the metallized film may be coated with a resin such as polyphenylene oxide.

The film capacitor of the present invention is formed using the metallized film of the present invention. That is, the film capacitor of the present invention includes the metallized film of the present invention.

For example, the film capacitor of the present invention can be obtained by laminating or winding the metallized film of the present invention described above by various methods. A preferable method for producing a wound film capacitor is as follows.

Aluminum is vapor-deposited on one surface of the polyolefin-based film under a reduced pressure. At that time, vapor deposition is performed in a stripe shape having a margin portion running in the machine direction. Next, slits are made with a blade at the center of each vapor deposition portion and the center of each margin portion on the surface to produce a tape-shaped winding reel having a margin on one side of the surface. Two tape-shaped winding reels respectively having a left margin and a right margin are overlapped and wound such that the vapor deposition portion protrudes from the margin portion in the transverse direction to obtain a wound body.

When both surfaces of the film are subjected to vapor deposition, aluminum is vapor-deposited in a stripe pattern having margins running in the machine direction on one surface, and aluminum is vapor-deposited on the other surface in a stripe pattern so that margins in the machine direction are positioned at the center of the vapor deposition portion on the back surface. Next, slits are made with a blade at the center of each margin portion on the front and back surfaces to produce a tape-shaped winding reel having a margin on one side (for example, if there is a margin on the front right side, a margin is on the left side on the back side) on both surfaces. Two sheets including one obtained reel and one undeposited laminated film are overlapped and wound so that the metallized film protrudes from the laminated film in the transverse direction to obtain a wound body.

A wound film capacitor can be obtained by removing a core material from the wound body produced as described above, pressing the wound body, performing metal spraying on both end surfaces to form external electrodes, performing a heat treatment at a temperature of 125°C or more under a reduced pressure, and welding a lead wire to the metal-sprayed portions. The upper limit of the heat treatment temperature is 150°C. Here, the heat treatment at a temperature of 125°C or more in the state of the external electrode described above is preferable from the viewpoint that the withstand voltage and reliability are easily obtained when the capacitor is used in a high-temperature environment at 125°C or more. A film capacitor can be used in a wide variety of applications such as railway vehicle applications, automobile applications (hybrid cars and electric automobiles), electric aircraft, solar power generation/wind power generation applications, and general home appliance applications, and the film capacitor of the present invention can also be suitably used in these applications. In addition, the polyolefin-based film of the present invention can be preferably used in various applications such as a packaging film, a release film, a processing film, a sanitary product, an agricultural product, a building product, and a medical product, particularly in applications including a heating step in film processing.

Hereinafter, a power control unit, an electric vehicle, and an electric aircraft of the present invention will be described. The power control unit of the present invention includes the film capacitor of the present invention. The power control unit is a system that manages power in an electric vehicle, an electric aircraft, or the like having a mechanism driven by electric power. By installing the film capacitor of the present invention in the power control unit, the power control unit itself can be reduced in size, improved in heat resistance and efficiency, and as a result, the fuel efficiency is improved.

The electric vehicle of the present invention includes the power control unit of the present invention. Here, the electric vehicle refers to an automobile having a mechanism driven by electric power, such as an electric automobile, a hybrid automobile, and a fuel cell automobile. As described above, since the power control unit of the present invention can be downsized and is also excellent in heat resistance and efficiency, the electric vehicle including the power control unit of the present invention leads to improvement in fuel efficiency and the like.

The electric aircraft of the present invention includes the power control unit of the present invention. Here, the electric aircraft refers to an aircraft having a mechanism driven by electric power, such as a manned electric aircraft and a drone. As described above, since the power control unit of the present invention can be downsized and has excellent heat resistance and efficiency, the electric aircraft including the power control unit of the present invention leads to improvement in fuel efficiency and the like.

EXAMPLES

Hereinafter, the polyolefin-based film of the present invention will be more specifically described with reference to examples. However, the polyolefin-based film of the present invention is not limited to these examples. Note that measurement methods of characteristic values in the present invention and the methods for evaluating the effects are as follows.

[Measurement and evaluation methods]

(1) Film thickness

The thickness of the polyolefin-based film was measured at 10 arbitrary positions in an atmosphere of 23°C and 65% RH using a contact-type electronic micrometer (K-312A type) manufactured by ANRITSU CORPORATION. An arithmetic average value of the thicknesses at the 10 positions was taken as a film thickness (unit: um) of the polyolefin-based film.

(2) Total light transmittance

A haze meter (HGM-2DP for illuminant C) manufactured by Suga Test Instruments Co., Ltd. was used. A piece having a size of 6.0 cm × 3.0 cm was cut out from the polyolefin-based film, and a value of the total light transmittance in the film thickness direction was obtained from a measured value when the transmittance of a light ray incident perpendicularly to the surface of the polyolefin-based film was measured. Five measurements were taken, and their average was adopted as the total light transmittance.

(3) Internal haze

A haze meter (HGM-2DP for illuminant C) manufactured by Suga Test Instruments Co., Ltd. was used. A piece having a size of 6.0 cm × 3.0 cm was cut out from the polyolefin-based film, the polyolefin-based film was inserted into a quartz cell filled with purified water and having an optical path length of 1 cm, light was applied perpendicularly to the film surface, and measurement was performed to obtain a value of the internal haze. Five measurements were taken, and their average was adopted as the internal haze.

(4) MD orientation parameter (MOP) and TD orientation parameter (TOP), and MOP/TOP

The film was embedded in a bisphenol epoxy resin ("Epomount Base Resin 27-771, Epomount Curing Agent 27-772" manufactured by Refine Tec Ltd.), curing was performed for 24 hours, and then respective measurement sections of the polyolefin-based film in the machine direction (MD) and the transverse direction (TD) were cut out using a microtome to prepare a measurement sample. Polarized Raman measurement (beam diameter: 1 μm) was performed from the center position in the thickness direction of each of the measurement sections in the MD and the TD of the polyolefin-based film by Raman microscopy under the following apparatus and conditions to obtain a polarized Raman spectrum. The MD orientation parameter (MOP) and the TD orientation parameter (TOP) were determined using the respective Raman band intensities at 810 cm$^{-1}$ and 840 cm$^{-1}$ of the polarized Raman spectrum, and the value of MOP/TOP was calculated.

The polarized Raman spectrum was acquired by applying linearly polarized light on the film and detecting only a component parallel to the incident light in the obtained scattered light. However, in order to eliminate the anisotropy of a spectrometer, a λ/4 plate was installed after an analyzer and before a grating, and the scattered light in a state in which the polarization state was eliminated was introduced into the grating.

The number (hereinafter also referred to as a number n) of measurements on each section was five. The MD orientation parameter (MOP) was determined from the Raman band intensities (I810MD, I840MD, I810MZD, and I840MZD) at 810 cm$^{-1}$ and 840 cm$^{-1}$ on the MD section from the later-described calculation formula. The TD orientation parameter (TOP) was determined from the Raman band intensities (I810TD, I840TD, I810TZD, and I840TZD) at 810 cm$^{-1}$ and 840 cm$^{-1}$ on the TD section from the later-described calculation formula.

<Details of measurement conditions of Raman microscopy>

Apparatus: T-64000 (Jobin Yvon/Atago Bussan Co., Ltd.)

Conditions: measurement mode; microscopic
Objective lens: $\times$ 100
Beam diameter: 1 um
Light source: Ar+ laser/514.5 nm
Laser power: 100 mW
Diffraction grating: Single 1,800 gr/mm
Slit: 100 um
Detector: CCD/Jobin Yvon 1,024 $\times$ 256.

<Calculation of orientation parameters>

MOP = (I810MD/I840MD)/(I810MZD/I840MZD)
I810MD: The Raman band intensity around 810 $cm^{-1}$ obtained when polarized light parallel to the MD is incident on a film section in the machine direction (MD)
I840MD: The Raman band intensity around 840 $cm^{-1}$ obtained when polarized light parallel to the MD is incident on a film section in the machine direction (MD)
I810MZD: The Raman band intensity around 810 $cm^{-1}$ obtained when polarized light parallel to the thickness direction (ZD) is incident on a film section in the machine direction (MD)
I840MZD: The Raman band intensity around 840 $cm^{-1}$ obtained when polarized light parallel to the thickness direction (ZD) is incident on a film section in the machine direction (MD)
TD orientation parameter (TOP) = (I810TD/I840TD)/(I810TZD/I840TZD)
I810TD: The Raman band intensity around 810 $cm^{-1}$ obtained when polarized light parallel to the TD is incident on a film section in the transverse direction (TD)
I840TD: The Raman band intensity around 840 $cm^{-1}$ obtained when polarized light parallel to the TD is incident on a film section in the transverse direction (TD)
I810TZD: The Raman band intensity around 810 $cm^{-1}$ obtained when polarized light parallel to the thickness direction (ZD) is incident on a film section in the transverse direction (TD)
I840TZD: The Raman band intensity around 840 $cm^{-1}$ obtained when polarized light parallel to the thickness direction (ZD) is incident on a film section in the transverse direction (TD).

(5) Melting peak temperature (Tm) of resin and film

With the use of a differential scanning calorimeter (EXSTAR DSC6220 manufactured by Seiko Instruments Inc.), 3 mg of the film in a nitrogen atmosphere was heated from 30°C to 260°C under the condition of 20°C/min, then held at 260°C for 5 minutes, and then cooled to 30°C under the condition of 20°C/min. The endothermic peak temperature obtained in the heating process was defined as the melting peak temperature of the film. In the present example, the (Tm) was calculated from the average value obtained by measurement with n = 3. There are the case where two or more peak temperatures are observed within the range of more than 170°C and 200°C or less and the case where a peak temperature that can be observed on a multi-step DSC chart referred to as a shoulder (observed in the case of a chart with two or more peaks overlapped with each other) appears, but in the present example, the temperature of a peak with the largest absolute value of the vertical axis heat flow (unit: mW) on a DSC chart was regarded as the (Tm) (°C). As for the (Tm) of the resin, the sample was heated from 30°C to 260°C under the condition of 20°C/min, then held at 260°C for 5 minutes, and then cooled to 30°C under the condition of 20°C/min. The sample was further held at 20°C for 5 minutes and heated as reheating from 30°C to 260°C under the condition of 20°C/min. The endothermic peak temperature obtained in the reheating process was defined as the melting peak temperature of the resin.

(6) Glass transition temperature (Tg) of cycloolefin-based resin

Measurement was performed according to JIS K 7121-1987. With the use of a differential scanning calorimeter (EXSTAR DSC6220 manufactured by Seiko Instruments Inc.), 3 mg of the film or resin in a nitrogen atmosphere was heated from 30°C to 260°C under the condition of 20°C/min, then held at 260°C for 5 minutes, and then cooled to 30°C under the condition of 20°C/min. The sample was further held at 20°C for 5 minutes and heated as reheating from 30°C to 260°C under the condition of 20°C/min. From the DSC curve obtained in the reheating process, the glass transition temperature (Tg) was calculated from the following formula. Glass transition temperature = (extrapolated glass transition starting temperature + extrapolated glass transition end temperature)/2.

(7) Loss tangent (tan 50) at 0°C in film transverse direction

Under the following apparatus and conditions, a rectangular polyolefin-based film (width (short side) 10 mm × length (long side) 20 mm) cut out with the transverse direction being a long side direction was attached to an apparatus chuck portion under an atmosphere of 23°C and set in a furnace. The atmosphere in the furnace in which the film was set was cooled with liquid nitrogen, the temperature was raised from -100°C to 180°C to perform measurement, a viscoelasticity-temperature curve was drawn by a dynamic viscoelasticity method, and the storage elastic modulus (E'0) at 0°C and the loss elastic modulus (E"0) at 0°C were read. The number of measurement tests was n = 3, the average value of the storage elastic modulus (E'0) and the average value of the loss elastic modulus (E"0) were each calculated, and the loss tangent (tan 50) at 0°C in the film transverse direction was calculated from the following formula.

$$\text{Formula; } \tan \delta 0 = E''0/E'0$$

<Apparatus and conditions>

Apparatus: EXSTAR DMS 6100 (manufactured by Seiko Instruments Inc.)
Test mode: Tensile mode
Distance between chucks: 20 mm
Frequency: 10 Hz
Strain amplitude: 10.0 um
Gain: 1.5
Initial value of force amplitude: 400 mN
Temperature range: -100 to 180°C
Heating rate: 5°C/min
Measurement atmosphere: Atmosphere
Measured thickness: The film thickness of the above (1) was used.

(8) Shrinkage stress (135Tf) at 135°C in film transverse direction

A polyolefin-based film was cut into a rectangular sample having a width of 4 mm and a length of 50 mm with the measurement direction (transverse direction) being a long side, and the film was pinched by a metal chuck so as to have a test length of 20 mm. The sample pinched by the chuck was set in the following apparatus, and the stress curve in the transverse direction of the film whose test length was kept constant was obtained by the following temperature program. The obtained stress curve was corrected with the shrinkage stress value at a temperature closest to 25°C being the 0 point, the shrinkage stress at 135°C (unit: MPa) was read, and the average value of measurements with n = 3 was taken as the 135Tf (unit: MPa).

<Apparatus and temperature program>

Apparatus: Thermomechanical analyzer TMA/SS6000
(manufactured by Seiko Instruments Inc.)
Test mode: L control mode
Test length: 20 mm
Temperature range: 23 to 200°C
Heating rate: 10°C/min
Initial displacement: 0 um
SS program: 0.1 um/min
Measurement atmosphere: Nitrogen
Measured thickness: The film thickness of the above (1) was used.

(9) Film dielectric breakdown voltage (V/um) in environment of 135°C

The film was heated for 1 minute in an oven maintained at 135°C and then measured in that atmosphere according to Method B (flat plate electrode method) of JIS C 2330 (2001) 7.4.11.2. However, as for the lower electrode, one obtained by placing "Conductive Rubber E-100 <65>" manufactured by TOGAWA RUBBER CO., LTD. having the same dimensions on a metal plate described in Method B of JIS C 2330 (2001) 7.4.11.2 was used. A breakdown voltage test was carried out 30 times. Each obtained value was divided by the thickness of the film (measured in above-described (1)) and converted into the unit of V/um. From the measured values (calculated values) of 30 points in total, 5 points in descending order from the maximum value and 5 points in ascending order from the minimum value were excluded, and the average value of the remaining 20 points was taken as the film dielectric breakdown voltage at 135°C.

(10) Number of domains (number/$\mu$m$^2$) of cycloolefin resin passing through pair of sides parallel to thickness direction in square of side 1 um in layer A

Using a microtome method, an ultrathin section having a section (TD/ZD section) in the transverse direction-thickness direction for the layer A of the polyolefin-based film was collected. The collected section was stained with RuO$_4$, and the section was observed using a transmission electron microscope (TEM) under the following conditions. At this time, the cycloolefin-based resin is stained blacker than the polypropylene-based resin.

    · Apparatus: TEM HT7700 manufactured by Hitachi, Ltd.
    · Acceleration voltage: 100 kV
    · Observation magnification: 20,000 times

A square of side 1 um defined such that a pair of sides were parallel to the thickness direction was drawn on the image collected in the observation, and the number of domains of the cycloolefin-based resin passing through the pair of sides parallel to the thickness direction in the square was counted. The average value of the numbers of domains obtained by performing the same measurement a total of 10 times while changing the position of the square in the image was calculated and taken as the number of domains (number/$\mu$m$^2$) of the cycloolefin resin passing through the pair of sides parallel to the thickness direction in the layer A. When the square of side 1 um was defined in the section X such that a pair of sides were parallel to the thickness direction, the base of the square was set in the sea portion, and when a domain was located on a side facing the base, the domain was considered to be absent and was not counted as the domains. In addition, a domain having a constricted part was regarded as a cycloolefin-based resin domain stained deeper than the polypropylene-based resin portion serving as the sea portion and was treated as a connected domain.

(11) Number of domains (number/2 $\mu$m$^2$) of cycloolefin resin passing through pair of sides parallel to thickness direction in rectangle measuring 1 um $\times$ 2um in layer A

Observation was performed in the same manner as in (10), a rectangle of 2 $\mu$m$^2$ surrounded by four sides around in which a rectangle that had a pair of sides measuring 1 um in the thickness direction and measuring 2 um in the direction orthogonal to the thickness direction was defined was drawn on the image collected, and the number of domains of the cycloolefin-based resin passing through the pair of sides parallel to the thickness direction in the rectangle was counted. The average value of the numbers of domains obtained by performing the same measurement a total of 10 times while changing the position of the rectangle in the image was calculated and taken as the number of domains (number/2 $\mu$m$^2$) of the cycloolefin resin passing through the pair of sides parallel to the thickness direction in the layer A. When the rectangle that had the pair of sides measuring 1 um in the thickness direction and measuring 2 um in the direction orthogonal to the thickness direction was defined in the section X, the base of the rectangle was set in the sea portion, and when a domain was located on a side facing the base, the domain was considered to be absent and was not counted as the domains. In addition, a domain having a constricted part was also treated as a connected domain.

(12) Thermal shrinkage ratio (130S) in machine direction of film after heat treatment at 130°C for 10 minutes

A rectangle sample having a length of 30 mm and a width of 10 mm was cut out such that the long sides lay along the machine direction of the polyolefin-based film, and five such samples were prepared. A gauge line parallel to the transverse direction was marked at a position 5 mm away from the center of each short side toward the center of the film to give a sample length of 20 mm (L0). Next, the test piece was heated for 10 minutes in an oven maintained at 130°C in a state of being sandwiched between paper, then taken out, and cooled to room temperature, and then a length (L1) between the two gauge lines was measured. Calculation was performed using the following formula:

```
Thermal shrinkage ratio = {(L0 - L1)/L0} × 100 (%),
```

and the arithmetic average value of the ratios for five samples was defined as the thermal shrinkage ratio (130S).

(13) Average value (nm) of lengths in thickness direction of domains of cycloolefin resin in layer A

Under the same conditions as in the above (10), the section of the layer A of the polyolefin-based film was observed to obtain an image. Next, a square of side 1 um was drawn on the acquired image such that a pair of sides were parallel to the thickness direction, and the cycloolefin-based resin domains passing through the pair of sides in the thickness direction in the square were specified. Thereafter, a straight line passing through the intersection of the diagonal lines of the square and parallel to the thickness direction was drawn, and the length in the thickness direction of each specified domain was measured on the straight line. For all the cycloolefin-based resin domains passing through the pair of sides parallel to the thickness direction of the square, the length of the domain in the thickness direction was measured by drawing line on the uppermost part and the lowermost part of the cycloolefin-based resin domain stained deeper than the polypropylene-based resin portion serving as the sea portion on a straight line passing through the intersection of diagonal lines of the square and parallel to the thickness direction, and measuring the interval between the lines. Furthermore, the average value of the lengths in the thickness direction of the domains thus obtained was determined. Furthermore, the same measurement was performed 10 times in total by arbitrarily changing the position of the square (at this time, all 10 squares were set so as not to overlap one another), the average value of the average values of the lengths of the domains in the thickness direction in the respective measurements was determined, and the obtained value was taken as the average value (unit: nm) of the lengths of the domains of the cycloolefin resin in the thickness direction.

(14) Evaluation of film capacitor characteristics (withstand voltage and reliability at 135°C)

Aluminum was deposited on one surface (the surface having the higher wet tension when the wet tension was different between the front and back surfaces) of the film in a vacuum deposition pattern having a film resistance of 10 $\Omega$/sq and what is called a T-shaped margin (machine direction pitch (period) of 17 mm and fuse width of 0.5 mm due to masking oil) in which a margin portion was provided in a direction perpendicular to the machine direction using a vacuum deposition machine manufactured by ULVAC, Inc. to obtain a deposition reel having a film width of 50 mm (end margin width: 2 mm) after slitting. Then, using this reel, the capacitor element was wound with an element winding machine (KAW-4NHB) manufactured by KAIDO MANUFACTURING CO., LTD., subjected to metal spraying, and then subjected to a heat treatment at a temperature of 128°C for 12 hours under a reduced pressure, and a lead wire was attached to finish the capacitor element. Using the obtained 10 capacitor elements, what is called a step-up test was performed in which the operation of applying a voltage of 150 VDC to the capacitor elements at a high temperature of 135°C and gradually increasing the applied voltage stepwise at 50 VDC/1 minute after a lapse of 10 minutes at the voltage was repeated.

<Evaluation of withstand voltage>

In the step-up test, the change in electrostatic capacitance was measured and plotted on the graph, the voltage at which the capacitance reached 70% of the initial value was divided by the thickness of the film (the above-mentioned (1)) to determine the withstand voltage, and the average value of 10 capacitor elements was calculated and evaluated according to the following criteria. A and B mean that the element can be used, and C means inferiority in practical performance.

A: 330 V/um
B: 320 V/um or more and less than 330 V/um
C: less than 320 V/um.

<Evaluation of reliability>

After increasing the voltage until the electrostatic capacitance decreased to 12% or less with respect to the initial value, 1 of the 10 capacitor elements to which the highest withstand voltage was applied was disassembled to examine the state of breakdown, and the reliability was evaluated as follows. A means that the element can be used, B means that the element can be used depending on the conditions, and C means inferiority in practical performance.

A: There was no change in element shape, and penetrating destruction of one or more and five or less layers of the film was observed. Alternatively, no change in element shape and no penetrating destruction were observed.
B: There was no change in element shape, and penetrating destruction of 6 or more and 10 or less layers of the film was observed.

C: A change in element shape was observed, or penetrating destruction of more than 10 layers was observed.

[Resin and the like]

In the production of the polyolefin-based film in each of examples and comparative examples, the following resins and the like were used.

<Polypropylene resin>

Polypropylene resin 1:

A polypropylene resin having a meso-pentad fraction of 0.982, a melting point of 167°C, and a melt flow rate (MFR) of 2.2 g/10 min.

Polypropylene resin 2:

A polypropylene resin having a meso-pentad fraction of 0.972, a melting point of 166°C, and an MFR of 2.2 g/10 min.

Polypropylene resin 3:

A polypropylene resin having a meso-pentad fraction of 0.970, a melting point of 166°C, and an MFR of 3.3 g/10 min ("Borclean" (registered trademark) HC300BF available from Borealis AG).

Polypropylene resin 4:

A polypropylene resin having a meso-pentad fraction of 0.984, a melting point of 168°C, and an MFR of 2.2 g/10 min.

Polypropylene resin 5:

A polypropylene resin having a meso-pentad fraction of 0.940, a melting point of 162°C, and an MFR of 2.9 g/10 min ("F113G" manufactured by Prime Polymer Co., Ltd.)

<Components other than polypropylene resin>

Cycloolefin-based resin:

"TOPAS" (registered trademark) 6013F-04 (a resin (COC) obtained by copolymerizing ethylene and norbornene, having a glass transition temperature of 138°C) manufactured by Polyplastics Co., Ltd.
"APEL" (registered trademark) 5014CL(04) (a cycloolefin resin that is a resin (COC) obtained by copolymerizing ethylene and a norbornene derivative and has a glass transition temperature of 135°C) manufactured by Mitsui Chemicals, Inc.
"ZEONOR" (registered trademark) 1420R (a cycloolefin resin that is a resin (COP) formed of a norbornene derivative and has a glass transition temperature of 135°C) manufactured by Zeon Corporation

Antioxidant:

"IRGANOX" (registered trademark) 1010 manufactured by Ciba Specialty Chemicals.

<Polypropylene raw material>

Polyolefin-based resin raw material (A1):

The respective components were mixed so that the amount of the polypropylene resin 1 was 69.5 parts by mass, the amount of "TOPAS" (registered trademark) 6013F-04 manufactured by Polyplastics Co., Ltd. as the cycloolefin-based resin was 30 parts by mass, and the amount of the antioxidant was 0.5 parts by mass, the mixture was kneaded and extruded with a twin-screw extruder set at 260°C, and then the strands were cooled with water and made into chips to provide a polyolefin-based resin raw material (A1).

Polyolefin-based resin raw material (A2):

The respective components were mixed so that the amount of the polypropylene resin 2 was 69.5 parts by mass, the amount of "TOPAS" (registered trademark) 6013F-04 manufactured by Polyplastics Co., Ltd. as the cycloolefin-based resin was 30 parts by mass, and the amount of the antioxidant was 0.5 parts by mass, the mixture was kneaded and extruded with a twin-screw extruder set at 260°C, and then the strands were cooled with water and made into chips to provide a polyolefin-based resin raw material (A2).

Polyolefin-based resin raw material (A3):

The respective components were mixed so that the amount of "TOPAS" (registered trademark) 6013F-04 manufactured by Polyplastics Co., Ltd. as the cycloolefin-based resin was 100 parts by mass, and the amount of the antioxidant was 0.3 parts by mass, the mixture was kneaded and extruded with a twin-screw extruder set at 260°C, and then the strands were cooled with water and made into chips to provide a polyolefin-based resin raw material (A3).

(Example 1)

Respective components were mixed so that the amount of the polyolefin-based resin raw material (A1) was 30 parts by mass, the amount of the polypropylene resin 1 was 69.6 parts by mass, and the amount of the antioxidant was 0.4 parts by mass, and the mixture was supplied to a single-screw melt extruder and melted at a temperature of 260°C, foreign matters were removed with an 80 um cut sintered filter, and then the molten polymer was discharged from a T-die. Thereafter, the molten sheet was brought into close contact with a casting drum held at 30°C using an air knife and cooled for solidification to provide an unstretched polyolefin-based film. The unstretched polyolefin-based film was preheated in a stepwise manner up to 145°C with a plurality of roll groups, subsequently passed through rolls maintained at 155°C and provided with a difference in circumferential speed, and stretched 5.1 times in the machine direction. Subsequently, the film was guided to a tenter, preheated at a TD preheating temperature of 174°C (8°C higher than the TD drawing temperature) with both ends in the film width direction held by clips, and then stretched 9.8 times in the transverse direction at a TD stretching temperature of 166°C. Furthermore, a heat treatment was performed at 162°C while being relaxed by 8% in the transverse direction as the heat treatment and relaxation treatment, the film was guided to the outside of the tenter, the clip was released, and the film surface (close to the casting drum contact surface) was then subjected to a corona discharge treatment at a treatment intensity of 25 W·min/m$^2$ in the atmosphere, thereby providing a polyolefin-based film. The results of evaluation are shown in Table 1.

(Example 2)

Respective components were mixed so that the amount of the polyolefin-based resin raw material (A1) was 66.6 parts by mass, the amount of the polypropylene resin 1 was 30 parts by mass, and the amount of the antioxidant was 0.4 parts by mass, the mixture was supplied to a single-screw melt extruder for the layer A, and the polypropylene resin 1 was supplied to a single-screw melt extruder for the layer B. The supplied mixture and resin were each melted at 260°C, and foreign matters were removed with an 80 um cut sintered filter. After that, the extrusion amount was adjusted with a feedblock so as to obtain a lamination thickness ratio (lamination ratio) of 1/10/1 (the ratio of the inner layer A to the total film thickness was 83%) in the three-layer lamination of B/A/B, and the obtained molten laminated polymer was discharged from a T-die. Then, a polyolefin-based film was obtained in the same manner as in Example 1 except that film formation conditions shown in Table 1 were employed. The evaluation results are shown in Table 1, and a photograph of the section X is shown in Fig. 2 (in Fig. 2, portions of a deep color are the domains of the cycloolefin-based resin). The thickness was adjusted by adjusting the extrusion discharge amount (the same applies hereinafter).

(Example 3)

Respective components were mixed so that the amount of the polyolefin-based resin raw material (A1) was 90 parts by mass, the amount of the polypropylene resin 1 was 9.6 parts by mass, and the amount of the antioxidant was 0.4 parts by mass, the mixture was supplied to a single-screw melt extruder and melted at a temperature of 260°C, foreign matters were removed with an 80 um cut sintered filter, then the molten polymer was discharged from a T-die, and a polyolefin-based film was obtained in the same manner as in Example 1 except that film formation conditions shown in Table 1 were employed. The results of evaluation are shown in Table 1.

(Example 4)

Respective components were mixed so that the amount of the polyolefin-based resin raw material (A2) was 53 parts by mass, the amount of the polypropylene resin 1 was 46.6 parts by mass, and the amount of the antioxidant was 0.4 parts by mass, the mixture was supplied to a single-screw melt extruder and melted at a temperature of 260°C, foreign matters were removed with an 80 um cut sintered filter, then the molten polymer was discharged from a T-die, and a polyolefin-based film was obtained in the same manner as in Example 1 except that film formation conditions shown in Table 1 were employed. The results of evaluation are shown in Table 1.

(Example 5)

An unstretched polyolefin-based film was obtained in the same manner as in Example 1. Thereafter, the unstretched polyolefin-based film was guided to a simultaneous biaxial stretching machine, preheated at 164°C with both ends in the film width direction held by clips, and subjected to simultaneous biaxial stretching of 4.1 times in the machine direction and 10.8 times in the transverse direction. Furthermore, a heat treatment, a relaxation treatment, and a corona discharge treatment were performed in the same manner as in Example 1 to provide a polyolefin-based film. The results of evaluation are shown in Table 1.

(Example 6)

A polyolefin-based film was obtained in the same manner as in Example 1 except that the polypropylene resin 1 was changed to the polypropylene resin 5 and that film formation conditions in Table 1 were employed. The results of evaluation are shown in Table 1.

(Example 7)

A polyolefin-based film was obtained in the same manner as in Example 1 except that the heat treatment and the relaxation treatment after the biaxial stretching were performed under the film formation conditions in Table 1. The results of evaluation are shown in Table 1.

(Example 8)

Respective components were mixed so that the amount of the polyolefin-based resin raw material (A1) was 6.6 parts by mass, the amount of the polypropylene resin 1 was 93.0 parts by mass, and the amount of the antioxidant was 0.4 parts by mass, the mixture was supplied to a single-screw melt extruder, and a polyolefin-based film was obtained in the same manner as in Example 1 except that film formation conditions shown in Table 1 were employed. The results of evaluation are shown in Table 1.

(Example 9)

A polyolefin-based film was obtained in the same manner as in Example 1 except that as a COP instead of the COC as the cycloolefin-based resin of the polyolefin-based resin raw material (A1), "ZEONOR" (registered trademark) 1420R (a cycloolefin resin having a glass transition temperature of 135°C) manufactured by Zeon Corporation was used and that the film was formed under conditions shown in Table 1. The results of evaluation are shown in Table 1.

(Example 10)

A polyolefin-based film was obtained in the same manner as in Example 1 except that as the cycloolefin-based resin of the polyolefin-based resin raw material (A1), "APEL" (registered trademark) 5014CL(04) (a cycloolefin resin having a glass transition temperature of 135°C) manufactured by Mitsui Chemicals, Inc. was used and that the film was formed under conditions shown in Table 1. The results of evaluation are shown in Table 1.

(Comparative Example 1 and Comparative Example 6)

Respective components were mixed so that the amount of the polypropylene resin 3 was 80 parts by mass, the amount of "TOPAS" (registered trademark) 6013F-04 manufactured by Polyplastics Co., Ltd. as the cycloolefin-based resin was 20 parts by mass, and the amount of the antioxidant was 0.3 parts by mass, the mixture was supplied to a single-screw extruder set at 260°C and melted at a temperature of 260°C, then foreign matters were removed with an 80 um cut sintered filter, and the molten single-layer polymer was discharged from a T-die. The product was brought into close contact with a casting drum held at 90°C using an air knife and cooled for solidification to provide an unstretched polyolefin-based film. Then, a polyolefin-based film was obtained in the same manner as in Example 1 except that film formation conditions shown in Table 2 were employed. The results of evaluation are shown in Table 2.

(Comparative Example 2)

An unstretched polyolefin-based film obtained in the same manner as in Comparative Example 1 was guided to a simultaneous biaxial stretching machine, preheated at 163°C with both ends in the film width direction held by clips, and subjected to simultaneous biaxial stretching of 3.8 times in the machine direction and 8 times in the transverse direction. Subsequently, the film was guided to the outside of the simultaneous biaxial stretching machine without being subjected to the heat treatment and the relaxation treatment, the clip at the end of the film was released, and a corona discharge treatment was performed in the same manner as in Example 1 to provide a polyolefin-based film. The results of evaluation are shown in Table 2.

(Comparative Example 3)

A polyolefin-based film was obtained in the same manner as in Example 2 except that for the raw material for the layer A, melt extrusion was performed with a single-screw melt extruder without performing pre-kneading with a twin-screw extruder and that film formation conditions shown in Table 2 were employed. The results of evaluation are shown in Table 2.

(Comparative Example 4)

The polyolefin-based resin raw material (A3) was used as the raw material for the layer A, and the polypropylene resin 4 was used as the resin for the layer B. The raw material for the layer A was supplied to a single-screw melt extruder for the layer A, and the resin for the layer B was supplied to a single-screw melt extruder for the layer B. The materials were each melted at a temperature of 260°C, and foreign matters were removed with an 80 um cut sintered filter. After that, the extrusion amount was adjusted with a feedblock so as to obtain a lamination thickness ratio (lamination ratio) of 1/1/1 (the ratio of the inner layer A to the total film thickness was 33%) in the three-layer lamination of B/A/B, and the obtained molten laminated polymer was discharged from a T-die. The molten sheet was brought into close contact with a casting drum held at 70°C using an air knife and cooled for solidification to provide an unstretched polyolefin-based film. Then, a polyolefin-based film was obtained in the same manner as in Example 1 except that film formation conditions shown in Table 2 were employed. The results of evaluation are shown in Table 2.

(Comparative Example 5)

An unstretched polyolefin-based film having a single-layer configuration of only the layer A was obtained in the same manner as in Example 1 without performing biaxial stretching or heat setting. The results of evaluation are shown in Table 2.

[Table 1-1]

| | | Example 1 | Example 2 | Example 3 | Example 4 | Example 5 |
|---|---|---|---|---|---|---|
| Laminated configuration | – | Single layer including only A | B/A/B | Single layer including only A | Single layer including only A | Single layer including only A |
| Lamination ratio | – | – | 1/10/1 | – | – | – |
| Layer B — Polypropylene resin — Meso-pentad fraction | – | – | 0.982 | – | – | – |
| Melting point | (°C) | – | 167 | – | – | – |
| Layer A — Cycloolefin-based resin | – | Amorphous | Amorphous | Amorphous | Amorphous | Amorphous |
| Whether raw material compounding is performed | – | Performed | Performed | Performed | Performed | Performed |
| Polypropylene resin — Meso-pentad fraction | – | 0.982 | 0.982 | 0.982 | 0.972 | 0.982 |
| Melting point | (°C) | 167 | 167 | 167 | 166 | 167 |
| Content of cycloolefin-based resin in entire film | (% by mass) | 9 | 17 | 27 | 16 | 12 |
| Number of domains of cycloolefin resin in square of side 1 μm in layer A | (number/μm²) | 8 | 12 | 6 | 4 | 8 |
| Number of domains of cycloolefin resin in rectangle measuring 1 μm × 2 μm in layer A | (number/2 μm²) | 8 | 11 | 4 | 3 | 8 |
| Length in thickness direction of domain of cycloolefin resin in layer A | (nm) | 40 | 30 | 90 | 100 | 50 |
| Casting drum temperature | (°C) | 30 | 30 | 30 | 30 | 30 |
| Longitudinal stretch ratio | (Times) | 5.1 | 5.5 | 4.0 | 4.1 | 4.1 |
| Longitudinal stretching temperature | (°C) | 155 | 154 | 155 | 154 | Simultaneous biaxial 164 |
| Lateral stretch ratio | (Times) | 9.8 | 10.2 | 9.8 | 8.7 | 10.8 |
| Area ratio | (Times) | 50.0 | 56.1 | 39.2 | 35.7 | 44.3 |
| Lateral preheating temperature/lateral stretching temperature | (°C) | 174/166 | 175/167 | 176/168 | 174/166 | Simultaneous biaxial 164 |
| Heat treatment temperature | (°C) | 162 | 162 | 162 | 160 | 160 |
| Relaxation treatment | (%) | 8 | 8 | 8 | 8 | 8 |
| Thickness of film | (μm) | 3.6 | 4.2 | 3.8 | 3.8 | 3.6 |
| Total light transmittance | (%) | 93 | 93 | 91 | 89 | 93 |
| Internal haze | (%) | 0.3 | 0.4 | 0.3 | 2.2 | 0.3 |
| Melting point of film (Tm) | (°C) | 175 | 175 | 173 | 172 | 175 |
| Orientation parameter (MOP) | – | 1.65 | 1.71 | 1.58 | 1.41 | 1.52 |
| Orientation parameter (TOP) | – | 4.10 | 4.57 | 5.54 | 5.55 | 4.52 |
| Ratio of orientation parameters (MOP/TOP) | – | 0.40 | 0.37 | 0.29 | 0.25 | 0.34 |
| Loss tangent (tan δ0) at 0°C in film transverse direction | – | 0.04 | 0.04 | 0.06 | 0.06 | 0.04 |
| Shrinkage stress (135Tf) at 135°C in film transverse direction | (MPa) | 0.8 | 1.1 | 1.4 | 1.6 | 1.3 |
| Thermal shrinkage ratio (130S) in film machine direction after heat treatment at 130°C for 10 minutes | (%) | 2.4 | 2.6 | 2.1 | 2.0 | 2.3 |
| Film dielectric breakdown voltage at 135°C | (V/μm) | 435 | 427 | 376 | 368 | 433 |
| Capacitor characteristics in atmosphere of 135°C — Withstand voltage | | A | A | B | B | A |
| Reliability | | A | A | A | B | A |

[Table 1-2]

| | | | Example 6 | Example 7 | Example 8 | Example 9 | Example 10 |
|---|---|---|---|---|---|---|---|
| Laminated configuration | | – | Single layer including only A | Single layer including only A | Single layer including only A | Single layer including only A | Single layer including only A |
| Lamination ratio | | – | – | – | – | – | – |
| Layer B / Polypropylene resin | Meso-pentad fraction | – | – | – | – | – | – |
| | Melting point | (°C) | – | – | – | – | – |
| Layer A | Cycloolefin-based resin | – | Amorphous | Amorphous | Amorphous | Amorphous | Amorphous |
| | Whether raw material compounding is performed | – | Performed | Performed | Performed | Performed | Performed |
| Polypropylene resin | Meso-pentad fraction | – | 0.940 | 0.982 | 0.982 | 0.982 | 0.982 |
| | Melting point | (°C) | 162 | 167 | 167 | 167 | 167 |
| Content of cycloolefin-based resin in entire film | | (% by mass) | 9 | 9 | 2 | 9 | 9 |
| Number of domains of cycloolefin resin in square of side 1 μm in layer A | | (number/μm$^2$) | 8 | 8 | 3 | 7 | 8 |
| Number of domains of cycloolefin resin in rectangle measuring 1 μm × 2 μm in layer A | | (number/2 μm$^2$) | 8 | 8 | 1 | 6 | 7 |
| Length in thickness direction of domain of cycloolefin resin in layer A | | (nm) | 40 | 40 | 100 | 45 | 40 |
| Film formation conditions | Casting drum temperature | (°C) | 30 | 30 | 30 | 30 | 30 |
| | Longitudinal stretch ratio | (Times) | 5.0 | 5.1 | 5.1 | 5.0 | 5.1 |
| | Longitudinal stretching temperature | (°C) | 152 | 155 | 155 | 155 | 155 |
| | Lateral stretch ratio | (Times) | 9.9 | 9.8 | 9.7 | 9.8 | 9.9 |
| | Area ratio | (Times) | 49.5 | 50.0 | 49.5 | 49.0 | 50.5 |
| | Lateral preheating temperature/lateral stretching temperature | (°C) | 172/164 | 174/166 | 175/166 | 175/167 | 175/168 |
| | Heat treatment temperature | (°C) | 160 | 140 | 162 | 163 | 161 |
| | Relaxation treatment | (%) | 8 | 0 | 8 | 8 | 8 |
| Film characteristics | Thickness of film | (μm) | 3.6 | 3.6 | 3.7 | 3.8 | 3.7 |
| | Total light transmittance | (%) | 93 | 87 | 93 | 93 | 93 |
| | Internal haze | (%) | 0.3 | 2.3 | 0.3 | 0.3 | 0.3 |
| | Melting point of film (Tm) | (°C) | 168 | 174 | 175 | 175 | 175 |
| | Orientation parameter (MOP) | – | 1.62 | 1.66 | 1.65 | 1.62 | 1.63 |
| | Orientation parameter (TOP) | – | 4.21 | 4.05 | 4.06 | 4.11 | 4.11 |
| | Ratio of orientation parameters (MOP/TOP) | – | 0.38 | 0.41 | 0.41 | 0.39 | 0.40 |
| | Loss tangent (tan δ0) at 0°C in film transverse direction | – | 0.06 | 0.07 | 0.07 | 0.04 | 0.04 |
| | Shrinkage stress (135Tf) at 135°C in film transverse direction | (MPa) | 2.6 | 5.5 | 3.6 | 0.9 | 0.9 |
| | Thermal shrinkage ratio (130S) in film machine direction after heat treatment at 130°C for 10 minutes | (%) | 2.2 | 5.1 | 4.2 | 2.5 | 2.4 |
| | Film dielectric breakdown voltage at 135°C | (V/μm) | 411 | 366 | 350 | 431 | 433 |
| Capacitor characteristics in atmosphere of 135°C | Withstand voltage | | B | B | B | A | A |
| | Reliability | | B | B | B | A | A |

[Table 2]

| | | | Comparative Example 1 | Comparative Example 2 | Comparative Example 3 | Comparative Example 4 | Comparative Example 5 | Comparative Example 6 |
|---|---|---|---|---|---|---|---|---|
| Laminated configuration | | – | Single layer including only A | Single layer including only A | B/A/B | B/A/B | Single layer including only A | Single layer including only A |
| Lamination ratio | | – | – | – | 1/10/1 | 1/1/1 | – | – |
| Layer B Polypropylene resin | Meso-pentad fraction | – | – | – | 0.982 | 0.984 | – | – |
| | Melting point | (°C) | – | – | 167 | 168 | – | – |
| Layer A | Cycloolefin-based resin | – | Amorphous | Amorphous | Amorphous | Amorphous | Amorphous | Amorphous |
| | Whether raw material compounding is performed | – | Not performed | Not performed | Not performed | – | Performed | Not performed |
| Polypropylene resin | Meso-pentad fraction | – | 0.970 | 0.970 | 0.982 | – | 0.982 | 0.970 |
| | Melting point | (°C) | 166 | 166 | 167 | – | 167 | 166 |
| Content of cycloolefin-based resin in entire film | | (% by mass) | 20 | 20 | 17 | 33 | 9 | 20 |
| Number of domains of cycloolefin resin in square of side 1 μm in layer A | | (number/μm$^2$) | 2 | 2 | 2 | – | 0 | 2 |
| Number of domains of cycloolefin resin in rectangle measuring 1 μm × 2 μm in layer A | | (number/2 μm$^2$) | 0 | 0 | 2 | – | 0 | 0 |
| Length in thickness direction of domain of cycloolefin resin in layer A | | (nm) | 310 | 430 | 155 | – | 1020 | 310 |
| Film formation conditions | Casting drum temperature | (°C) | 90 | 90 | 30 | 70 | 30 | 90 |
| | Longitudinal stretch ratio | (Times) | 3.3 | 3.8 | 3.5 | 3.3 | – | 3.4 |
| | Longitudinal stretching temperature | (°C) | 147 | Simultaneous biaxial 163 | 155 | 146 | – | 148 |
| | Lateral stretch ratio | (Times) | 6.3 | 8.0 | 10.5 | 10.5 | – | 6.1 |
| | Area ratio | (Times) | 20.8 | 30.4 | 36.8 | 34.7 | – | 20.7 |
| | Lateral preheating temperature/lateral stretching temperature | (°C) | 168 | Simultaneous biaxial 163 | 176/168 | 167 | – | 168 |
| | Heat treatment temperature | (°C) | – | – | 160 | 150 | – | 165 |
| | Relaxation treatment | (%) | – | – | 5 | 10 | – | 8 |
| Film characteristics | Thickness of film | (μm) | 8 | 6 | 5.5 | 3.5 | 25 | 8 |
| | Total light transmittance | (%) | 83 | 84 | 82 | 81 | 70 | 84 |
| | Internal haze | (%) | 4.2 | 3.1 | 3.1 | 1.5 | 10.5 | 4.1 |
| | Melting point of film (Tm) | (°C) | 167 | 167 | 169 | 169 | 167 | 167 |
| | Orientation parameter (MOP) | – | 1.04 | 1.50 | 1.37 | 1.21 | 1.11 | 1.06 |
| | Orientation parameter (TOP) | – | 6.58 | 6.52 | 6.54 | 6.88 | 1.01 | 6.61 |
| | Ratio of orientation parameters (MOP/TOP) | – | 0.16 | 0.23 | 0.21 | 0.18 | 1.10 | 0.16 |
| | Loss tangent (tan δ) at 0°C in film transverse direction | – | 0.08 | 0.07 | 0.07 | 0.06 | 0.10 | 0.08 |
| | Shrinkage stress (135Tf) at 135°C in film transverse direction | (MPa) | 3.6 | 3.8 | 5.1 | 0.8 | 0.5 | 1.5 |
| | Thermal shrinkage ratio (130S) in film machine direction after heat treatment at 130°C for 10 minutes | (%) | 5.5 | 4.9 | 4.4 | 4.6 | 0.2 | 1.9 |
| | Film dielectric breakdown voltage at 135°C | (V/μm) | 285 | 310 | 325 | 316 | 178 | 305 |
| Capacitor characteristics in atmosphere of 135°C | Withstand voltage | | C | C | C | C | C | C |
| | Reliability | | C | B | B | B | C | C |

In Tables 1 and 2, the content of the cycloolefin-based resin in the entire film was calculated assuming that the content of the entire resin components was 100% by mass without considering the antioxidant.

INDUSTRIAL APPLICABILITY

The polyolefin-based film of the present invention can be widely used in industrial applications such as capacitor applications, packaging applications, mold release applications, and tape applications and can be suitably used in capacitor applications used under high temperatures and high voltages because it is particularly excellent in withstand voltage characteristics and reliability in a high-temperature environment.

DESCRIPTION OF REFERENCE SIGNS

1: Part of section X
2: Sea portion
3: Island portion (domain)
4: Square of side 1 um defined in section X such that pair of sides are parallel to thickness direction
5: Pair of sides parallel to thickness direction

Claims

1. A polyolefin-based film comprising a layer (referred to as "layer A" for convenience) containing a cycloolefin-based resin and a polypropylene-based resin, the polyolefin-based film having a total light transmittance of 85% or more and an internal haze of 4.0% or less.

2. A polyolefin-based film comprising a layer (referred to as "layer A" for convenience) containing a cycloolefin-based resin and a polypropylene-based resin,
wherein, assuming a section obtained by cutting the layer A along a plane parallel to a main orientation axis direction and a thickness direction is a section X, in a square of side 1 um defined in the section X such that a pair of sides are parallel to the thickness direction, there are three or more domains of the cycloolefin-based resin passing through the pair of sides parallel to the thickness direction, and an internal haze is 4.0% or less.

3. The polyolefin-based film according to claim 1 or 2, wherein, assuming a temperature of a peak with a largest absolute value of a heat flow in a melting peak is a melting peak temperature Tm (°C) in a DSC chart obtained by raising a temperature from 30°C to 260°C at 20°C/min with a differential scanning calorimeter DSC, the Tm is more than 170°C and 200°C or less.

4. The polyolefin-based film according to any one of claims 1 to 3, wherein a relationship between a machine direction orientation parameter (MOP) and a transverse direction orientation parameter (TOP) determined from a Raman band intensity measured by Raman spectroscopy satisfies a formula below:

$$MOP/TOP \geq 0.11.$$

5. The polyolefin-based film according to any one of claims 1 to 4, wherein a loss tangent (tan 50) determined by dynamic viscoelasticity measurement at 0°C in a transverse direction is 0.06 or less.

6. The polyolefin-based film according to any one of claims 1 to 5, having a shrinkage stress (135Tf) in a transverse direction at 135°C determined by thermomechanical analysis (TMA) of 5.0 MPa or less.

7. The polyolefin-based film according to any one of claims 1 to 6, having a thermal shrinkage ratio (130S) in a machine direction of more than 2.0% and 5.0% or less when subjected to a heat treatment at 130°C for 10 minutes.

8. The polyolefin-based film according to any one of claims 1 to 7, wherein the cycloolefin-based resin is an amorphous resin.

9. The polyolefin-based film according to any one of claims 1 to 8, wherein the polyolefin film is a film having a laminated configuration of three or more layers, the layer A is included as a layer other than an outermost layer, and two outermost layers both contain the polypropylene-based resin as a main component and have a larger content of the polypropylene-based resin than in the layer A and a smaller content of the cycloolefin-based resin than in the layer A.

10. The polyolefin-based film according to any one of claims 1 and 3 to 9, wherein, assuming a section obtained by cutting the layer A along a plane parallel to a main orientation axis direction and a thickness direction is a section X, in a square of side 1 um defined in the section X such that a pair of sides are parallel to the thickness direction, there are three or more domains of the cycloolefin-based resin passing through the pair of sides parallel to the thickness direction.

11. The polyolefin-based film according to any one of claims 1 to 10, wherein, assuming a section obtained by cutting the layer A along a plane parallel to a main orientation axis direction and a thickness direction is a section X, in a rectangle measuring 1 um × 2 um defined in the section X such that a pair of short sides are parallel to the thickness direction, there are two or more domains of the cycloolefin-based resin passing through the pair of short sides.

12. The polyolefin-based film according to any one of claims 2 to 11, wherein an average value of lengths in the thickness direction of the domains of the cycloolefin-based resin passing through the pair of sides is 1 nm or more and 300 nm or less.

13. A metallized film comprising a metal membrane on at least one surface of the olefin-based film according to any one of claims 1 to 12.

**14.** A film capacitor comprising the metallized film according to claim 13.

**15.** The film capacitor according to claim 14, produced by subjecting the metallized film to a heat treatment at 125°C or more.

**16.** A power control unit comprising the film capacitor according to claim 14 or 15.

**17.** An electric vehicle comprising the power control unit according to claim 16.

**18.** An electric aircraft comprising the power control unit according to claim 16.

【FIG1】

【FIG2】

【FIG3】

## INTERNATIONAL SEARCH REPORT

| International application No. |
|---|
| **PCT/JP2022/025078** |

### A. CLASSIFICATION OF SUBJECT MATTER

*C08J 5/18*(2006.01)i; *B29C 55/02*(2006.01)i; *B32B 27/00*(2006.01)i; *B32B 27/32*(2006.01)i; *H01G 4/32*(2006.01)i
FI:   C08J5/18 CES; B32B27/32 E; B32B27/00 A; H01G4/32 511G; H01G4/32 511L; B29C55/02

According to International Patent Classification (IPC) or to both national classification and IPC

### B. FIELDS SEARCHED

Minimum documentation searched (classification system followed by classification symbols)

C08J5/00-5/02; C08J5/12-5/22; B29C55/02; B32B1/00-43/00; C08J3/22; H01G4/00-4/32; H01G13/00-13/06; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-520127 A (TDK ELECTRONICS AG) 02 July 2020 (2020-07-02)<br>    claims 1-2, paragraphs [0005], [0009], [0022]-[0023], [0026]-[0030], [0035]-[0039],<br>    examples, table 5, sample 2 | 1-8, 10-18 |
| Y | | 9 |
| Y | JP 2020-521867 A (TOPAS ADVANCED POLYMERS GMBH) 27 July 2020 (2020-07-27)<br>    claims 1, 8, paragraphs [0076]-[0078], [0099] | 9 |
| X | JP 8-020689 A (TOKUYAMA CORP) 23 January 1996 (1996-01-23)<br>    claim 1, paragraphs [0006], [0020], [0032], [0039], table 1, example 9 | 1-8, 10-12 |
| A | プラスチック成形加工データブック（第2版）, 日刊工業新聞社, 28 January 2002<br>    p. 2, (NIKKAN KOGYO SHIMBUN, LTD.), non-official translation (Plastics Processing<br>    Databook (2nd edition)) | 3 |
| A | JP 2017-132841 A (OJI HOLDINGS CORP) 03 August 2017 (2017-08-03)<br>    claim 1, examples | 1-18 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 July 2022** | **09 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/025078** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 10-119127 A (TORAY IND INC) 12 May 1998 (1998-05-12)<br>claim 1, paragraph [0020], examples | 1-18 |
| A | WO 2016/182003 A1 (TORAY IND INC) 17 November 2016 (2016-11-17)<br>claims 1-18, examples | 1-18 |

Form PCT/ISA/210 (second sheet) (January 2015)

INTERNATIONAL SEARCH REPORT
Information on patent family members

International application No.

**PCT/JP2022/025078**

| Patent document cited in search report | | | Publication date (day/month/year) | Patent family member(s) | Publication date (day/month/year) |
|---|---|---|---|---|---|
| JP | 2020-520127 | A | 02 July 2020 | US 2021/0079179 A1 claims 1-2, paragraphs [0006], [0009], [0023]-[0024], [0027]-[0030], [0035]-[0039], examples, table 5 | |
| JP | 2020-521867 | A | 27 July 2020 | US 2021/0147645 A1 claims 1, 8, paragraphs [0086]-[0094], [0114] | |
| JP | 8-020689 | A | 23 January 1996 | US 5556920 A claim 1, paragraphs [0012], [0026], [0072], [0085]-[0086], table 1, example 9 | |
| JP | 2017-132841 | A | 03 August 2017 | (Family: none) | |
| JP | 10-119127 | A | 12 May 1998 | (Family: none) | |
| WO | 2016/182003 | A1 | 17 November 2016 | EP 3296348 A1 claims 1-18, examples | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015012076 A
- JP 2017022706 A
- JP 2018034510 A
- JP 2020521867 A

**Non-patent literature cited in the description**

- Film Capacitor Breakthrough, from Car to Energy. **MOTONOBU KAWAI.** NIKKEI ELECTRONICS. Nikkei Business Publications, Inc, 17 September 2012, 57-62